# EUROPEAN PATENT SPECIFICATION

(11) **EP 4 198 673 B1**
(45) Date of publication and mention of the grant of the patent: **29.05.2024**
(21) Application number: 22214064.2
(22) Date of filing: 16.12.2022
(51) Int. Cl.: G05D 7/06, F24H 15/215, F24H 15/238, F24H 15/31, F24H 15/414, F16K 31/04, F24D 12/02, F16K 5/06, F16K 11/087, F24F 11/84, F24F 11/89, F16K 27/06, F24D 19/10

(54) **SYSTEM FOR SELECTIVELY CONTROLLING A FLOW OF FLUID AND ASSOCIATED CONTROL METHOD**
VERFAHREN, STEUERUNG UND SYSTEM ZUR SELEKTIVEN STEUERUNG EINES FLUIDSTROMS
PROCÉDÉ, DISPOSITIF DE COMMANDE ET SYSTÈME POUR COMMANDER SÉLECTIVEMENT UN ÉCOULEMENT DE FLUIDE

(30) Priority: 16.12.2021 CH 0707312021
(43) Date of publication of application: 21.06.2023
(73) Proprietor: Belimo Holding AG, 8340 Hinwil ZH (CH)
(72) Inventor: Eigenmann, Lukas, 8607 Aathal-Seegräben (CH); Götz, Marco, 8340 Hinwil (CH); Mischler, Stefan, 8636 Wald (CH)
(74) Representative: Rentsch Partner AG

(56) References cited:
- EP-A1- 3 379 776
- EP-A1- 3 483 690
- WO-A1-2015/113829
- US-A1- 2021 172 777

## Description

### Field of the Invention

The present invention relates to a flow control system, a controller and a method for selectively controlling a flow of fluid in either a first fluid circuit or a second fluid circuit of a Heating, Ventilating and Air Conditioning HVAC system. The present invention further relates to a flow control system, a controller and a method for selectively limiting a flow of fluid in either a first fluid circuit or a second fluid circuit of an HVAC system.

### Background of the Invention

By regulating the flow of fluid through a thermal energy exchanger of an HVAC system, it is possible to adjust the amount of energy (respectively the amount of energy per unit of time, power) transferred by the thermal energy exchanger. For example, the energy exchange or the power transfer, correspondingly, is adjusted by regulating the amount of energy delivered to the thermal energy exchanger to heat or cool a room in a building, or by regulating the amount of energy delivered to a chiller for cooling purposes. While the fluid transport through the fluid circuit of the HVAC system is driven by one or more pumps or fans, the flow is typically regulated by varying the orifice (opening) or position of valves, e.g. manually or by way of actuators.

According to known flow control systems, controllers and methods for selectively controlling a flow of fluid in either a first fluid circuit or a second fluid circuit of an HVAC system, a 3-way valve is used both for directing the flow of fluid to either the first fluid circuit or the second fluid circuit and for controlling the amount of fluid flow therethrough, a second 3-way valve being arranged to direct the return fluid flow to either the first fluid circuit or the second fluid circuit. In such case, both the 3-way valve and the second 3-way valve jointly regulate the (amount of) fluid flow. In particular, so-called 6-way valves are known to be used, comprising two mechanically connected 3-way valves (or even joint together as a single mechanical unit).

WO 2015/113829 A1 describes a cooling/ heating system, whereby in order to switch between cooling and heating, the system 1 comprises two three way valves connected to a heat exchanger. A control valve is fluidically connected to the output of one of the two three way valves. In order to operate the system in a cooling mode, the actuator sends a control signal to each of the three way valves, instructing them to open a passage which provides cooling fluid. On the other hand, to operate the system in the heating mode, the actuator sends control signals to the three way valves in order to cause the three way valves to open a passage which provides heating fluid. The actuator may be connected to two temperature sensors and a flow meter, whereby the measurement from these sensors may be used for controlling a further valve by means of the actuator.

EP 3 483 690 A1 describes a valve-based flow control system and a method for controlling a fluid flow through a valve, the flow control valve being actuated by a controller, whereby a flowmeter is arranged at a fluid inlet or a fluid outlet of the valve to measure the fluid flow through the valve.

### Summary of the Invention

It is an object of this invention to provide an alternative flow control system, controller and method for selectively controlling a flow of fluid in either a first fluid circuit or a second fluid circuit of an HVAC system, enabling superior flow control performance, improved installation flexibility, and/or maximizing the maximum differential pressure.

According to the present disclosure, this object is achieved by the features of any one of the independent claims 1, 6, 10 and 11. In addition, further advantageous embodiments follow from the dependent claims and the description. In particular, this object is addressed by a flow control system for selectively controlling a flow of fluid in either a first fluid circuit or a second fluid circuit of an HVAC system, comprising a 3-way changeover valve, a control valve, a flow sensor, and a controller. The 3-way changeover valve comprises a first fluid input port fluidically connectable to the first fluid circuit, a second fluid input port fluidically connectable to the second fluid circuit, and a fluid output port. The 3-way changeover valve is switchable between fluidically connecting either the first fluid circuit or the second fluid circuit with the fluid output port, in particular by rotation of a shaft around an axis. The control valve, configured to regulate a flow of fluid therethrough - in particular by actuation using an electric motor - is fluidically connected to the fluid output port of the 3-way changeover valve. The flow sensor is arranged upstream from the control valve and configured to measure a current flow of fluid through the control valve. Arrangement of the flow sensor upstream from the control valve, is advantageous since disturbances of the fluid flow sometimes caused by a flow control valve are caused downstream from the flow sensor and therefore have a smaller effect on the flow measurement. Even though the flow sensor is arranged downstream of a valve, this valve is a changeover valve (and not a flow regulating valve) which has a defined position when opened, resulting in more stable conditions which allow an improved flow measurement - as compared to a flow sensor being arranged downstream from a flow regulating valve.

It is a further object of the present invention to provide an alternative flow control system, controller and method for selectively controlling a flow of fluid in either a first fluid circuit or a second fluid circuit of an HVAC system, which system, controller and method provide an improved, more precise flow control and/or enable a higher differential pressure. In addressing the object of providing an improved, more precise flow control, it was recognized that valves configured to be able to switch the flow of fluid between several fluid circuits (such as 3-way or 6-way valves for switching the flow of fluid between a first fluid circuit or a second fluid circuit) sometimes provide less precise flow control due to the fact that the flow control has to be performed over a more limited angular displacement (in case of 3-way or 6-way valves, over only 45° or even as little as 30°) as compared to 2-way flow control valves. Based on this recognition, the object of providing an improved, more precise control of a flow of fluid selectively in either a first fluid circuit or a second fluid circuit of an HVAC system is addressed by splitting the function of switching the flow of fluid (between the first fluid circuit or the second fluid circuit) and the function of controlling the amount of fluid flow, each function being carried out by a valve dedicated for that function. Splitting the function of switching the flow of fluid (between the first fluid circuit or the second fluid circuit) from the function of controlling the amount of fluid flow allows more freedom in the design of the flow control characteristic of the control valve. Accordingly, the two open positions are two fully open positions of the respective changeover valve, i.e. positions allowing a maximum fluid flow therethrough. According to embodiments, the maximum flow of the fully open position(s) is defined by a physical geometry of the valve, in particular the dimensions of an orifice for fluid flow. Alternatively, or additionally, the maximum flow of the fully open position(s) is defined in view of the fluid flow characteristics/capacities of the first fluid circuit respectively of the second fluid circuit.

The controller is communicatively connected to both the 3-way changeover valve and the control valve using a communication interface, such as a wired or wireless communication interface.

The controller is configured to receive - via a further communication interface, a flow setpoint signal, the flow setpoint signal comprising an indication of a fluid circuit selection and a flow setpoint value. For example, the flow setpoint signal may indicate a fluid flow setpoint value for heating or cooling.

The communication interface and/or the further communication interface comprise one or more of:
- A wired analogue communication interface, wherein a signal is transmitted by means of an analog signal (such as a voltage or current);
- A wired communication interface (such as: an Ethernet interface, in particular a Power over Ethernet; a BUS interface, in particular an MP-Bus, a Modbus, a BACnet or KNX interface);
- A Wide Area Network communication interface (such as GSM, LTE, 3G, 4G or 5G mobile communications circuit);
- A Low Power Wide Area Network interface (such as Narrowband Internet of Things NB-loT, Long Range LoRa/ LoRaWAN, SigFox, or Long Term Evolution Category M1 LTECatM1);
- A local area network communication interface (such as Wireless LAN);
- A short range wireless communication interface (such as Bluetooth, Bluetooth low energy BLE, Thread, UWB, LORA, LumenRadio, EnOcean and/or Zigbee); and/ or
- A close-range wireless communication interface (such as Radio Frequency Identification RFID or a Near Field Communication NFC).

Receiving the flow setpoint signal, the controller is configured to direct the 3-way changeover valve to switch between two fully open positions for fluidically connecting either the first fluid circuit or the second fluid circuit with the fluid output port according to the fluid circuit selection. In particular, the controller is configured to extract data indicating one of the first fluid circuit or second fluid circuit from the flow setpoint signal and generate a corresponding fluid circuit selection control signal, which when fed to the 3-way changeover valve, causes the 3-way changeover valve to direct the flow of fluid to the selected one of the first fluid circuit or second fluid circuit. According to embodiments disclosed herein, the fluid circuit selection control signal is a digital signal or an analog signal, such as a particular voltage or current value for each of the first or second fluid circuits.

Furthermore, the controller is configured to direct the control valve to control the flow of fluid, using the flow setpoint value and the current flow of fluid measured by the flow sensor. In particular, the controller is configured to decode the flow setpoint signal into a flow control signal and to generate an analog flow control signal (such as a signal of a voltage or current based on a voltage to flow setpoint value mapping characteristic to the control valve) and/or a digital flow control signal (such as a digital signal comprising a binary representation of a numerical value based on a numerical value to flow setpoint value mapping characteristic to the control valve).

In any of the embodiments disclosed herein, the controller may be comprised by any one of the valves, such as the 3-way changeover valve or the control valve and/or the flow sensor and/or distributed there-between. Alternatively, the controller is provided as a module separate from any of the valves.

According to embodiments disclosed herein, the controller is configured to temporarily drive the control valve to a closed position while directing the 3-way changeover valve to switch between two fully open positions. Closing off the fluid flow - by temporarily driving the control valve to a closed position - during actuation of the changeover valve(s) allows the use of changeover valves of a lower pressure differential - which are usually more compact, less expensive and may be actuated by a smaller actuator due to the reduced actuation torque required.

According to an embodiment, in addition to the control valve, the flow control system comprises a second 3-way changeover valve having a fluid return input port fluidically connected to the control valve; a first fluid return output port fluidically connectable to the first fluid circuit and a second fluid return output port fluidically connectable to the second fluid circuit, wherein the controller is further configured to switch the second 3-way changeover valve between two fully open positions for fluidically connecting either the first fluid circuit or the second fluid circuit with the fluid return input port. In a particular embodiment, the 3-way changeover valve is mechanically coupled with the second 3-way changeover valve to form a 6-way changeover valve, configured such that switching the 3-way changeover valve to fluidically connect a selected one of the first fluid circuit or second fluid circuit with the fluid output port of the 3-way changeover valve causes the second 3-way changeover valve to fluidically connect the selected one of the first fluid circuit or the second fluid circuit with the fluid return input port. Switching both input and return fluid ports using a single 6-way valve is advantageous, as it allows combining the precise flow control enabled by a dedicated flow control valve with the advantages of a dedicated valve for switching between fluid circuits, while requiring no separate actuators for the inflow and return fluid ports.

In order to enable a flexible installation of the fluid circuits and/or to account for installation errors/ limitations, according to embodiments disclosed herein, the controller is configurable to reverse the switching between the two fully open positions of the 3-way changeover valve and/or the second 3-way changeover valve. The reversal can be set by a corresponding configuration of the controller by means of a switch, a jumper and/or an electronic configuration command, received via a communication circuit of the controller, such as a wired or wireless communication circuit (e.g. NFC).

According to a further embodiment, the control valve itself is a 3-way valve having a fluid return input fluidically connected to the flow sensor, wherein the controller is further configured to control the 3-way valve such as to fluidically connect the fluid return input with either the first fluid circuit or the second fluid circuit. Employing a separate 3-way valve for switching between two fully open positions (for fluidically connecting either the first fluid circuit or the second fluid circuit) and another 3-way valve as control valve is advantageous as it allows a higher flexibility for installing the flow control system as compared to prior art systems based on a single, larger 6-way valve. Furthermore, there is a greater flexibility in the arrangement of the fluid connections, for example hot water can be connected to the left side for one valve and to the right side for the other valve. A separate 3-way valve for switching between the two fully open positions and another 3-way valve as control valve is also advantageous as each of the 3-way valves may be actuated by a smaller actuator due to the reduced actuation torque required. According to a particular embodiment, the 3-way changeover valve, for switching between the two fully open positions, has an orifice for the passage of fluid larger than the orifice of the 3-way valve as control valve in order to reduce the minimum pressure drop, in particular by means of a valve with a higher Kvs value(s) (The Kvs value being indicative of the flow through a valve at a fully open position at a pressure differential of 1 bar). Alternatively, or additionally, the 3-way changeover valve is a fast running valve in order to reduce the response time of switching between the two fully open positions, while the 3-way valve as control valve is a slower, but more precisely actuated control valve to increase the precision of the flow control, being driven by an actuator which may be different from the actuator driving the 3-way changeover valve. According to further embodiments, the control valve may be a globe valve, allowing a simpler definition of a particular valve characteristic.

In order to provide a separate measurement of thermal energy transferred in each of the first fluid circuit and a second fluid circuit, according to further embodiments, a first amount of energy transfer through the first fluid circuit and a second amount of energy transfer through the second fluid circuit is determined using the flow of fluid measured by the flow sensor and a temperature differential of the fluid in accordance with the fluid circuit selection. In particular, when the 3-way changeover valve is switched to fluidically connect the first fluid circuit with the fluid output port, energy transfer is counted towards the first amount of energy transfer. On the other hand, when the 3-way changeover valve is switched to fluidically connect the second fluid circuit with the fluid output port, energy transfer is counted towards the second amount of energy transfer. According to a particular embodiment, the determination of the first and second amount of energy transfer is implemented in the flow sensor and/ or the controller and output via a communication interface thereof.

It is an object of a second aspect, further disclosed herein - different from the claimed subject-matter, to provide more compact, less expensive alternative flow control system, controller and method for selectively controlling a flow of fluid in either a first fluid circuit or a second fluid circuit of an HVAC system. The object of the second aspect is achieved by a flow control system, of the second aspect - different from the claimed subject-matter, for selectively controlling a flow of fluid in either a first fluid circuit or a second fluid circuit of an HVAC system, comprising a 3-way changeover valve, a pressure-independent control valve, and a controller.

The pressure-independent control valve, of the second aspect - different from the claimed subject-matter, is fluidically connected to the fluid output port and configured to maintain an essentially constant fluid flow rate irrespectively (at least partially) of a pressure of the fluid. In particular, the pressure-independent control valve is a mechanical pressure-independent control valve, configured to maintain an essentially constant fluid flow rate by mechanical means, i.e. without a need for external power/control for the maintenance of essentially constant fluid flow rate. According to a particular embodiment of the second aspect - different from the claimed subject-matter, the pressure-independent control valve is a mechanical pressure-independent control valve, provided with a pressure equalizing insert comprising a housing having an actuating member displaceably mounted thereon and equipped to at least partially guide the fluid stream regulated by the pressure-independent control valve, and to cooperate with a valve seat to regulate the fluid stream as a function of a pressure difference prevailing in the fluid stream (as described in WO 14198412).

In addition to receiving the flow setpoint signal and directing the 3-way changeover valve to switch between the two fully open positions for fluidically connecting either the first fluid circuit or the second fluid circuit, according to the fluid circuit selection control; the controller of the second aspect - different from the claimed subject-matter is configured to direct the pressure-independent control valve to control the flow of fluid according to the flow setpoint value. According to further embodiments of the second aspect - different from the claimed subject-matter, in order to limit the maximum fluid flow, the controller is configured to limit the opening of the pressure-independent control valve to a maximum valve opening position. According to embodiments of the second aspect - different from the claimed subject-matter, separate maximum valve opening positions are defined for the first fluid circuit and the second fluid circuit, the controller being configured to apply the corresponding maximum valve opening position according to the fluid circuit selection control.

It is an object of a third aspect, further disclosed herein but different from the claimed subject-matter, to provide a more compact alternative flow control system, controller and method for selectively controlling a flow of fluid in either a first fluid circuit or a second fluid circuit of an HVAC system. The object of the third aspect is achieved by a flow control system of the third aspect - different from the claimed subject-matter, for selectively controlling a flow of fluid in either a first fluid circuit or a second fluid circuit of an HVAC system, comprising a 3-way valve comprising a first fluid input port fluidically connectable to the first fluid circuit, a second fluid input port fluidically connectable to the second fluid circuit, and a fluid output port. The flow control system of the third aspect - different from the claimed subject-matter further comprises a second 3-way valve comprising a fluid return input port; a first fluid return output port fluidically connectable to the first fluid circuit and a second fluid return output port fluidically connectable to the second fluid circuit. A first flow sensor is arranged upstream of the first fluid input port of the 3-way valve and configured to measure a current flow of fluid at the first fluid input port of the 3-way valve. Alternatively, the first flow sensor is arranged downstream of the first fluid return output port of the second 3-way valve and configured to measure a current flow of fluid at the first fluid return output port of the second 3-way valve. A second flow sensor is arranged upstream of the second fluid input port of the 3-way valve and configured to measure a current flow of fluid at the second fluid input port of the 3-way valve. Alternatively, the second flow sensor is arranged downstream of the second fluid return output port of the second 3-way valve and configured to measure a current flow of fluid at the second fluid return output port of the second 3-way valve. Embodiments according to the fourth aspect further disclosed herein are advantageous since no flow regulating or measuring components need to be installed between the valves and the consumer (e.g. heat exchanger), which is often a place where installation space is limited.

The flow control system further comprises a controller. The controller of the third aspect - different from the claimed subject-matter, is configured to receive a flow setpoint signal, the flow setpoint signal comprising an indication of a fluid circuit selection and a flow setpoint value. For example, the flow setpoint signal may indicate a fluid flow setpoint value for heating or cooling.

Based on the flow setpoint signal, the controller of the third aspect - different from the claimed subject-matter, is configured to drive the 3-way valve and the second 3-way valve to fluidically connect the first fluid circuit with the fluid output respectively with the fluid return input port, and to regulate the flow of fluid using the 3-way valve and/or the second 3-way valve in accordance with the flow setpoint signal and the flow of fluid measured by the first flow sensor; or to drive the 3-way valve and the second 3-way valve to fluidically connect the second fluid circuit with the fluid output respectively with the fluid return input port, and to regulate the flow of fluid using the 3-way valve and/or the second 3-way valve in accordance with the flow setpoint signal and the flow of fluid measured by the second flow sensor.

Providing a dedicated flow sensor for the first fluid circuit and the second fluid circuit is advantageous since no flow sensor needs to be installed between the 3-way valve and heat exchanger and hence also no quieting section is required. The dedicated flow sensor for the first fluid circuit and the second fluid circuit can be installed further away from the heat exchanger where more space is usually available.

Furthermore, providing a dedicated flow sensor for the first fluid circuit and the second fluid circuit enables the use of different sizes or kinds of sensors for the first flow sensor and the second flow sensor for use cases where the first fluid circuit and the second fluid circuit are to be operated at significantly different flow rates.

Providing dedicated flow sensors also allows separated measurement of fluid flow through the first fluid circuit and the second fluid circuit, which is advantageous for example for separately measuring thermal energy transfer through the first fluid circuit and the second fluid circuit, such as separate measurement for cooling and heating.

It is an object of a fourth aspect, further disclosed herein but different from the claimed subject-matter, to provide a flow control system, controller and method for selectively limiting a flow of fluid in either a first fluid circuit or a second fluid circuit of an HVAC system. The object of the fourth aspect is achieved by a flow limiting system comprising a 3-way control valve; a flow sensor configured to measure a current flow of fluid through the fluid output port of the 3-way control valve; and a controller. The controller of the fourth aspect - different from the claimed subject-matter, is configured to receive a setpoint valve position, a maximum flow value and an indication of a fluid circuit selection, the maximum flow value being received by the controller as part of a configuration - e.g. as a configuration parameter, and/or as part of a control signal. The controller is configured to direct the 3-way control valve to switch between fluidically connecting either the first fluid circuit or the second fluid circuit with the fluid output port according to the fluid circuit selection and to drive the 3-way control valve to the setpoint valve position value. If the flow of fluid measured by the flow sensor is equal to or greater than the maximum flow value, the controller directs the 3-way control valve to maintain a current position. Alternatively, if the flow of fluid measured by the flow sensor is equal to or greater than the maximum flow value, the controller incrementally reduces the setpoint valve position and drives the 3-way control valve to the thereby reduced setpoint valve position. Selectively limiting a flow of fluid in either a first fluid circuit or a second fluid circuit of an HVAC system is advantageous as it has the potential to reduce the risk for instability due to a cascade of temperature control loop and flow control loop, while still ensuring that the maximum flow limit is not exceeded.

According to particular embodiments of the fourth aspect - different from the claimed subject-matter, wherein the controller repeatedly receives the setpoint control values, the controller is configured to drive the 3-way control valve to a newly received setpoint valve position only if the newly received setpoint valve position is smaller than the setpoint valve position or if the flow of fluid measured by the flow sensor is smaller than the maximum flow value by a threshold margin.

The above-identified objectives of the fourth aspect - different from the claimed subject-matter, are further addressed according to the present invention by a computer program product comprising instructions, which, when executed by a processor of a controller of a flow limiting system cause the flow limiting system to carry out the method according to one of the embodiments disclosed herein.

In any of the embodiments of any one of the aspects of the present disclosure, the flow sensor may be an ultrasound flow sensor, in particular an ultrasound flow sensor with compensation for the composition of the fluid, such as a compensation for a glycol concentration within the fluid.

According to further embodiments of any of the aspects of the present disclosure, a power setpoint is received by the controller, the controller being configured to generate respective flow setpoint signal(s) in accordance with the power setpoint and a temperature differential between the fluid input port and fluid return input port of the 3-way valve (connecting the first and second fluid circuits). In other words, the flow setpoint signal received by the controller is generated internally by the controller itself. Alternatively, the flow setpoint signal is generated by a power setpoint to flow setpoint converter of the controller. Alternatively, or additionally, the controller is configured to generate respective flow setpoint signal(s) in accordance with a setpoint energy transfer signal, the setpoint energy transfer signal being indicative of a setpoint amount of energy transfer over a set period of time. By regulating the flow of fluid through the heat exchanger, it is possible to adjust the amount of energy exchanged by the heat exchangers, for example to adjust the amount of energy that is delivered per unit of time according to a power setpoint by the heat exchanger to heat or cool a room in a building or the amount of energy that is drawn by a chiller per time for cooling purposes.

Since the efficiency of heat exchangers is reduced at high flow rates where the fluid rushes at an increased rate through the heat exchangers, without resulting in a significant increase in energy exchange, according to particular embodiments, the controller generates respective flow setpoint signal(s) in accordance with a setpoint energy transfer signal such as to maximize the efficiency of the transfer of thermal energy based on thermal energy transfer characteristics of the heat exchanger, of the fluid itself, respectively of the entire HVAC system. Additionally, further parameters may be used, such as a room temperature, air humidity, or the presence and/or amount of dew.

According to various embodiments of any of the aspects of the present disclosure, the temperature differential is determined based on measurement of the temperature of the fluid upstream and downstream of the heat exchanger. For example, the temperature of the fluid can be measured downstream of the heat exchanger by the flow sensor (being configured to determine the temperature of the fluid - in addition to measuring flow rate) and a second temperature sensor arranged upstream of the heat exchanger - or vice-versa.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### Brief Description of the Drawings

The herein described disclosure will be more fully understood from the detailed description given herein below and the accompanying drawings which should not be considered limiting to the disclosure described in the appended claims. The drawings which show:
- Figure 1:: a highly schematic block diagram of a generic flow control system;
- Figure 2A:: a first embodiment of a flow control system for selectively controlling a flow of fluid in either a first fluid circuit or a second fluid circuit of an HVAC system, according to the present disclosure;
- Figure 2B:: a further embodiment of a flow control system for selectively controlling a flow of fluid in either a first fluid circuit or a second fluid circuit of an HVAC system, according to the present disclosure;
- Figure 2C:: a further embodiment of a flow control system for selectively controlling a flow of fluid in either a first fluid circuit or a second fluid circuit of an HVAC system, according to the present disclosure;
- Figure 3:: a further embodiment of a flow control system for selectively controlling a flow of fluid in either a first fluid circuit or a second fluid circuit of an HVAC system, according to the present disclosure, wherein the control valve is a 3-way valve;
- Figure 4:: a further embodiment of a flow control system for selectively controlling a flow of fluid in either a first fluid circuit or a second fluid circuit of an HVAC system, according to the present disclosure, comprising two 3-way valves in addition to a control valve;
- Figure 5:: a further embodiment of a flow control system for selectively controlling a flow of fluid in either a first fluid circuit or a second fluid circuit of an HVAC system, according to the present disclosure, comprising a 6-way valve in addition to a control valve;
- Figure 6:: a schematic flowchart of a method for selectively controlling a flow of fluid in either a first fluid circuit or a second fluid circuit of an HVAC system, according to the present disclosure;
- Figure 7:: a first embodiment of a flow control system for selectively controlling a flow of fluid in either a first fluid circuit or a second fluid circuit of an HVAC system, according to a second aspect, further disclosed herein but different from the claimed subject-matter, comprising a 6-way valve and a pressure-independent control valve;
- Figure 8:: shows a schematic flowchart of a method for selectively controlling a flow of fluid in either a first fluid circuit or a second fluid circuit of an HVAC system 200, according to a second aspect, further disclosed herein but different from the claimed subject-matter;
- Figure 9:: a first embodiment of a flow control system for selectively controlling a flow of fluid in either a first fluid circuit or a second fluid circuit of an HVAC system, according to a third aspect, further disclosed herein but different from the claimed subject-matter, comprising a 6-way valve and two flow sensors each arranged upstream of the 6-way valve to measure the flow of fluid of a first, respectively a second fluid circuit;
- Figure 10:: shows a schematic flowchart of a method for selectively controlling a flow of fluid in either a first fluid circuit or a second fluid circuit of an HVAC system 300, according to a third aspect, further disclosed herein but different from the claimed subject-matter;
- Figure 11:: shows an illustrative diagram showing various operating states of an HVAC system in relation to various values of the flow setpoint signal, the flow setpoint signal comprising an indication of a fluid circuit selection and a flow setpoint value;
- Figure 12:: shows a first embodiment of a flow limiting system for selectively limiting a flow of fluid in either a first fluid circuit or a second fluid circuit of an HVAC system, according to a fourth aspect, further disclosed herein but different from the claimed subject-matter; and
- Figure 13:: shows a schematic flowchart of a method for selectively controlling a flow of fluid in either a first fluid circuit or a second fluid circuit of an HVAC system 100, according to a fourth aspect, further disclosed herein but different from the claimed subject-matter.

### Detailed Description

Reference will now be made in detail to certain embodiments, examples of which are illustrated in the accompanying drawings, in which some, but not all features are shown.

Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

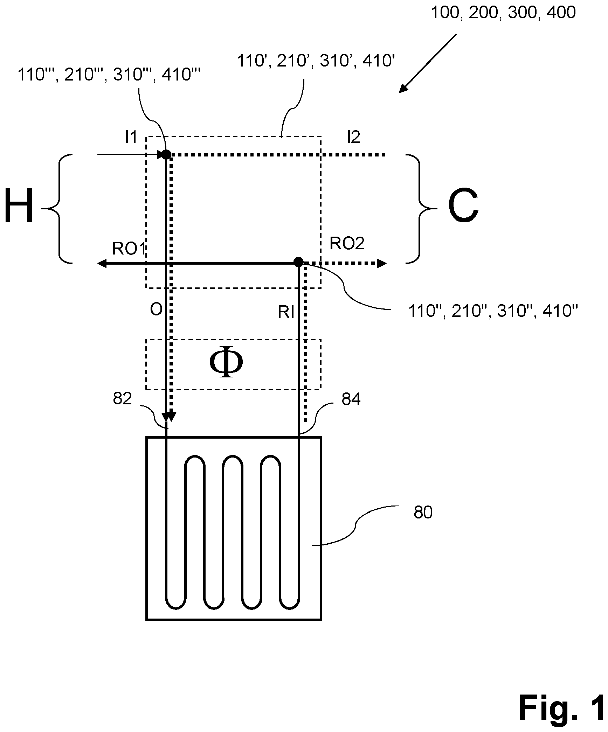

Figure 1 shows a highly schematic block diagram of a generic flow control system 100, 200, 300, 400 for selectively controlling or limiting a flow of fluid Φ in either a first fluid circuit H or a second fluid circuit C of an HVAC system.

A heat exchanger 80, having a fluid input side 82 and a fluid return side 84 is selectively fluidically connectable to either a first fluid circuit H or a second fluid circuit C. On Figure 1, a solid line illustrates the fluid flow when the heat exchanger 80 is fluidically connected to the first fluid circuit H (heating), while a dotted line illustrates the fluid flow when the heat exchanger 80 is fluidically connected to the second fluid circuit C (cooling).

As illustrated, a 3-way changeover valve 110', 210', 310', 410' is provided to selectively fluidically connect the heat exchanger 80 to eitherthefirstfluid circuit H or the second fluid circuit C. According to certain embodiments, a second 3-way changeover valve 110", 210", 310", 410" is provided to selectively fluidically connect the fluid return of the heat exchanger 80 to either the first fluid circuit H or the second fluid circuit C. According to particular embodiments (shown on Figure 1 with a fine dashed line), a 6-way valve 110, 210, 310, 410 comprises the 3-way changeover valve 110', 210', 310', 410', mechanically connected to the second 3-way changeover valve 110", 210", 310'.

The 3-way changeover valve 110', 210', 310', 410' and second 3-way changeover valve 110", 210", 310'comprise a first fluid input 11; a second fluid input I2; a fluid output port O; a fluid return input RI; a first fluid return output RO1; and a second fluid return output RO2. The 6-way 110, 210, 310, 410 may be operated in a first operating mode, a second operating mode and a third operating mode. In the first operating mode, the 6-way valve 110, 210, 310, 410 enables a flow of fluid from the first fluid input I1 towards the fluid output port O and a flow of fluid from the fluid return input RI towards the first fluid return output RO1. In the second operating mode, the 6-way valve 110, 210, 310, 410 enables a flow of fluid from the second fluid input I2 towards the fluid output port O and a flow of fluid from the fluid return input RI towards the second fluid return output RO2. In the third operating mode, the 6-way valve 110, 210, 310, 410 prevents passage of fluid between any of the first fluid input 11; the second fluid input(12); the fluid output port O; the fluid return input RI; the first fluid return output RO1 and the second fluid return output RO2. In order for the same heat exchanger 80 to be used for both heating and cooling, a fluid input side 82 of the heat exchanger 80 is fluidly connected to the fluid output port O of the 6-way valve 110, 210, 310, 410 and a fluid return side 84 fluidly connected to the fluid return input RI of the 6-way valve 110, 210, 310, 410.

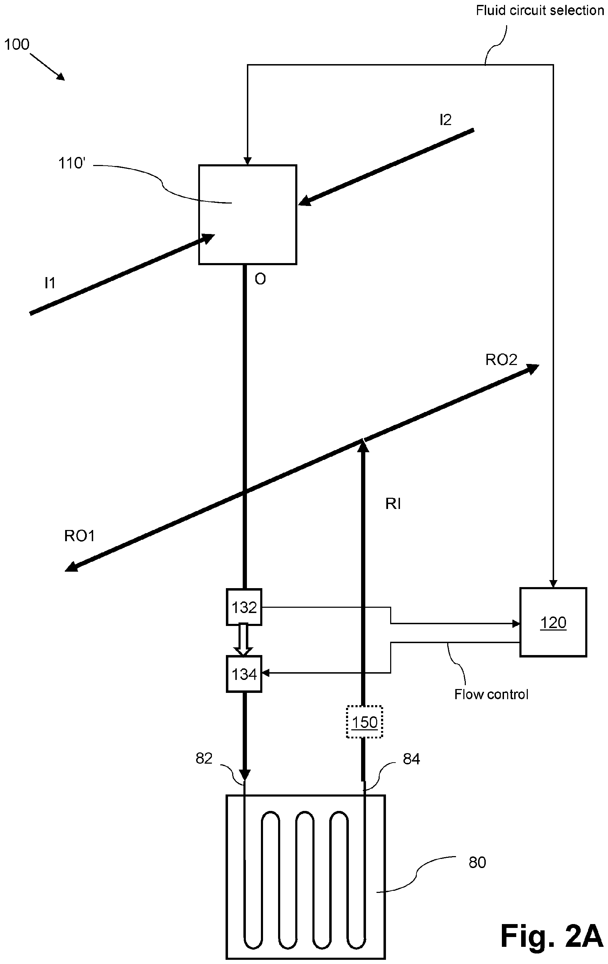

Figure 2A illustrates a first embodiment of a flow control system 100 for selectively controlling a flow of fluid in either a first fluid circuit H or a second fluid circuit C of an HVAC system. The flow control system 100 comprises a 3-way changeover valve 110', a control valve 134, a flow sensor 132, and a controller 120. The 3-way changeover valve 110' com prises a first fluid input port I1 fluidically connectable to the first fluid circuit H, a second fluid input port I2 fluidically connectable to the second fluid circuit C, and a fluid output port O connectable to a fluid input side 82 of a heat exchanger 80. The 3-way changeover valve 110' is switchable between fluidically connecting either the first fluid circuit H or the second fluid circuit C with the fluid output port O, in particular by rotation of a shaft around an axis. The control valve 134, configured to regulate a flow of fluid therethrough - in particular by actuation using of an electric motor - is fluidically connected to the fluid output port O of the 3-way changeover valve 110'. The flow sensor 132 is arranged upstream from the control valve 134 and configured to measure a current flow of fluid Φ through the control valve 134. The controller 120 is communicatively connected to both the 3-way changeover valve 110' and the control valve 134. The controller 120 is configured to receive a flow setpoint signal, the flow setpoint signal comprising of an indication of a fluid circuit selection and a flow setpoint value.

Receiving the flow setpoint signal, the controller 120 is configured to direct the 3-way changeover valve 110' to switch between the two fully open positions for fluidically connecting either the first fluid circuit H or the second fluid circuit C with the fluid output port O according to the fluid circuit selection. In particular, the controller 120 is configured to extract data indicating one of the first fluid circuit H or second fluid circuit C from the flow setpoint signal and generate a corresponding fluid circuit selection control signal, which when fed to the 3-way changeover valve, causes the 3-way changeover valve to direct the flow of fluid to the selected one of the first fluid circuit H or second fluid circuit C. According to embodiments disclosed herein, the fluid circuit selection control signal is a digital signal or of an analog signal, such as a particular voltage value for each of the first or second fluid circuits. Furthermore, the controller 120 is configured to direct the control valve 134 to control the flow of fluid, using the flow setpoint value and the current flow of fluid Φ measured by the flow sensor 132.

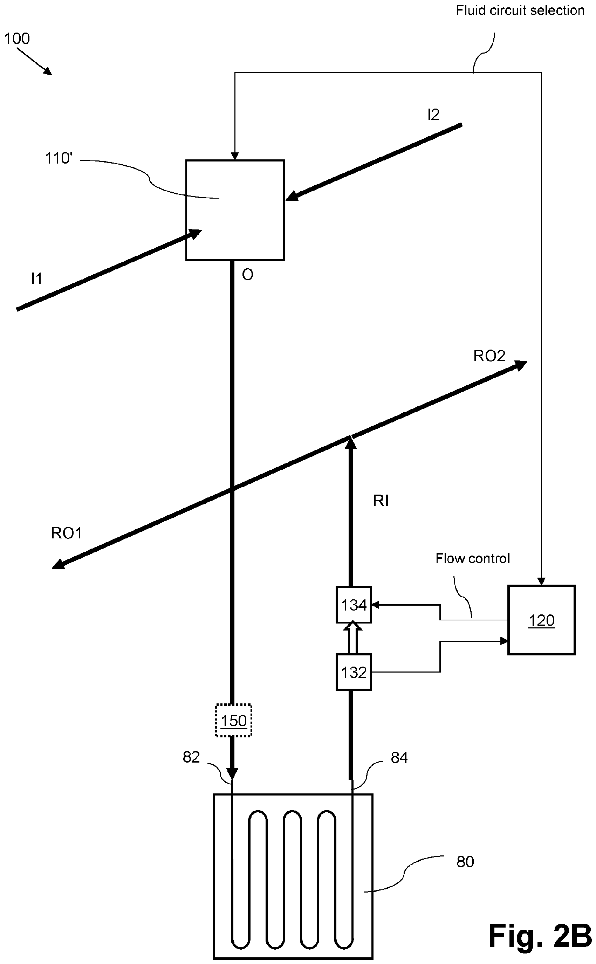

Figure 2B shows a second embodiment of a flow control system 100 for selectively controlling a flow of fluid in either a first fluid circuit H or a second fluid circuit C of an HVAC system, wherein - as compared to the embodiment of Figure 2A - the flow sensor 132 and the control valve 134 are arranged on the return side of the heat exchanger 80, the flow sensor 132 being arranged upstream the control valve 134.

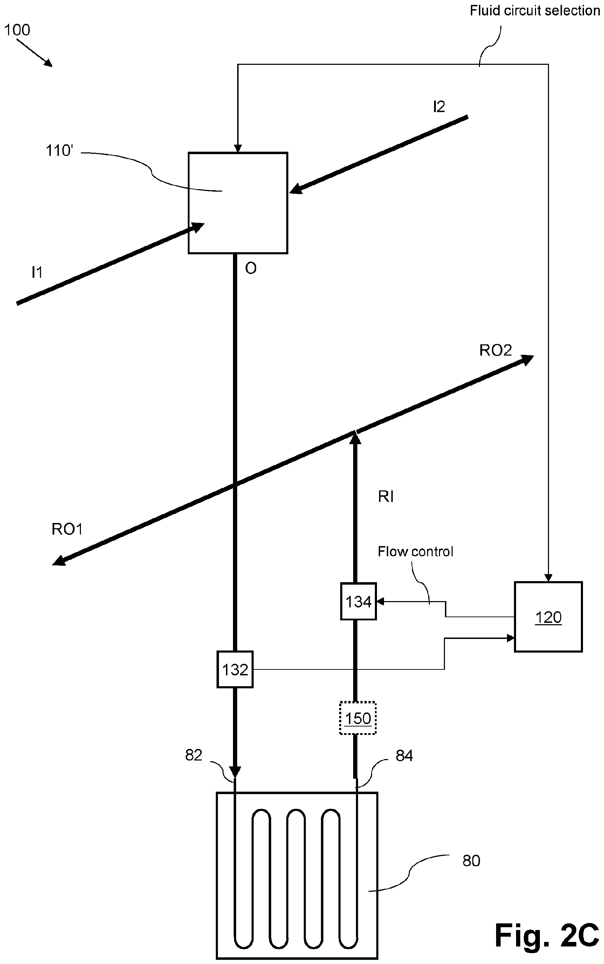

Figure 2C shows a further embodiment of a flow control system 100 for selectively controlling a flow of fluid in either a first fluid circuit H or a second fluid circuit C of an HVAC system, wherein - as compared to the embodiments of Figure 2A and 2B- the flow sensor 132 is arranged on the input side of the heat exchanger 80 while the control valve 134 are arranged on the return side of the heat exchanger 80.

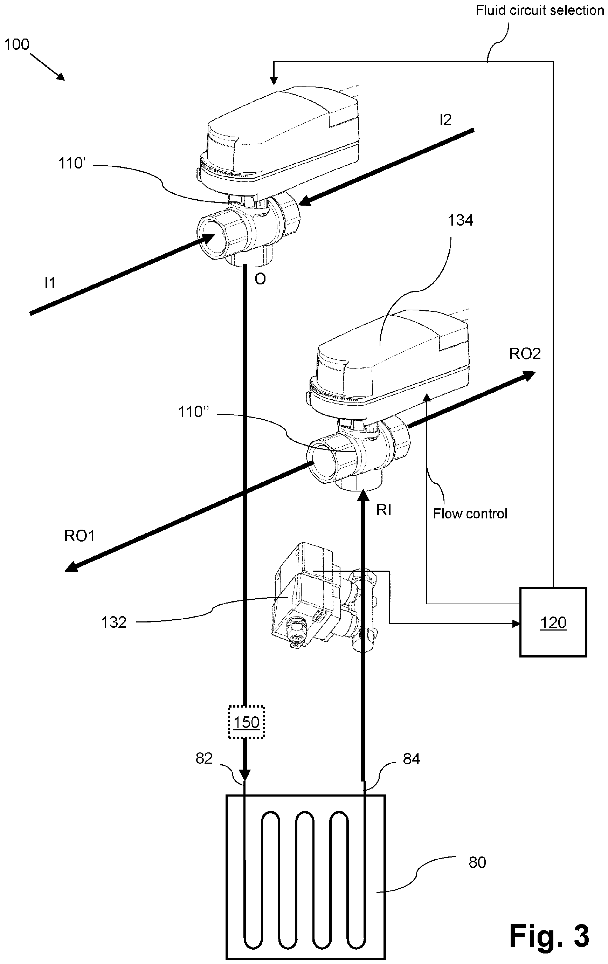

Figure 3 depicts an even further embodiment of a flow control system 100 for selectively controlling a flow of fluid in either a first fluid circuit H or a second fluid circuit C of an HVAC system, wherein the control valve 134 itself is a 3-way valve 134 having a fluid return input RI fluidically connected to the flow sensor 132, wherein the controller 120 is further configured to control the 3-way valve 134 such as to fluidically connect the fluid return input RI with either the first fluid circuit H or the second fluid circuit C.

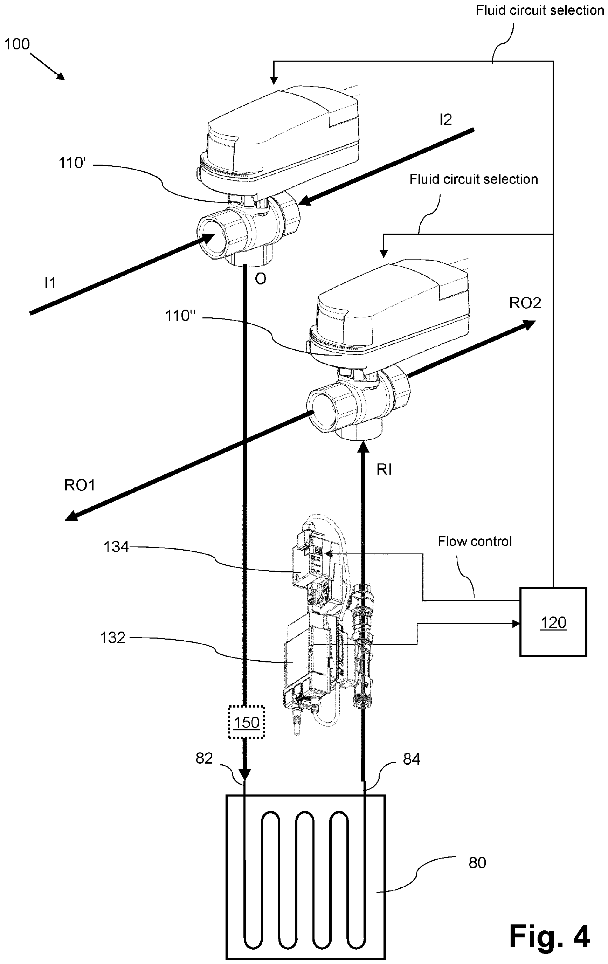

Figure 4 shows a further embodiment of a flow control system 100, further comprising a second 3-way changeover valve 110" having a fluid return input port RI fluidically connected to the control valve 134; a first fluid return output port RO1 fluidically connectable to the first fluid circuit H and a second fluid return output port RO2 fluidically connectable to the second fluid circuit C. In contrast to the embodiment shown on figure 3, according to the embodiment illustrated on Figure 4, the second 3-way changeover valve 110" is provided in addition to the control valve 34 and does not act for regulating the fluid flow but merely to switch between the first fluid circuit H and the second fluid circuit C. The controller 120 is further configured to switch the second 3-way changeover valve 110" between two fully open positions for fluidically connecting either the first fluid circuit H or the second fluid circuit C with the fluid return input port Rl.

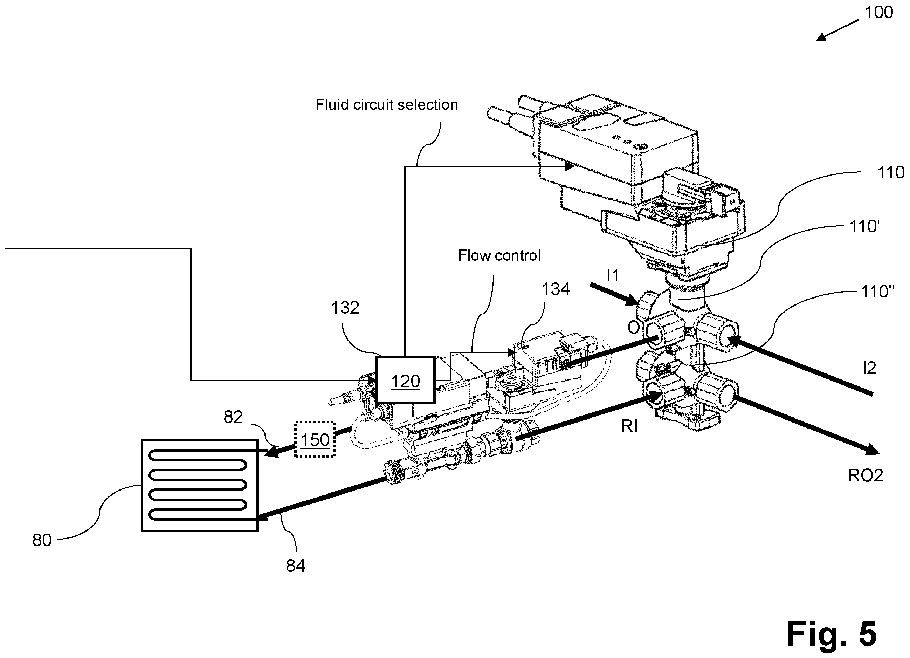

Figure 5 shows a further embodiment of a flow control system 100 for selectively controlling a flow of fluid in either a first fluid circuit H or a second fluid circuit C of an HVAC system, comprising - similar to the embodiment of Figure 4 - a second 3-way changeover valve 110", wherein the 3-way changeover valve 110' and the second 3-way changeover valve 110" are comprised by a 6-way valve 110. In other words, the 3-way changeover valve 110' is mechanically coupled with the second 3-way changeover valve 110" to form a 6-way changeover valve 110, configured such that switching the 3-way changeover valve 110' to fluidically connect a selected one of the first fluid circuit H or second fluid circuit C with the fluid output port O of the 3-way changeover valve 110' causes the second 3-way changeover valve 110" to fluidically connect the selected one of the first fluid circuit H or the second fluid circuit C with the fluid return input port Rl. Switching both input and return fluid ports using a single 6-way valve is advantageous, as it allows combining the precise flow control enabled by a dedicated flow control valve with the advantages of a dedicated valve for switching between fluid circuits, while requiring no separate actuator for the inflow and return fluid ports.

The controller 120 of any one of the embodiments disclosed herein may be comprised by any one of the valves, the flow sensor or distributed amongst these. In the embodiment shown on figure 5, the controller 120 - acting as master device - is implemented in electronic circuitry of the flow sensor 132, wherein the 6-way valve 110 and control valve 134 act as slave devices, receiving controls signals from the controller 120.

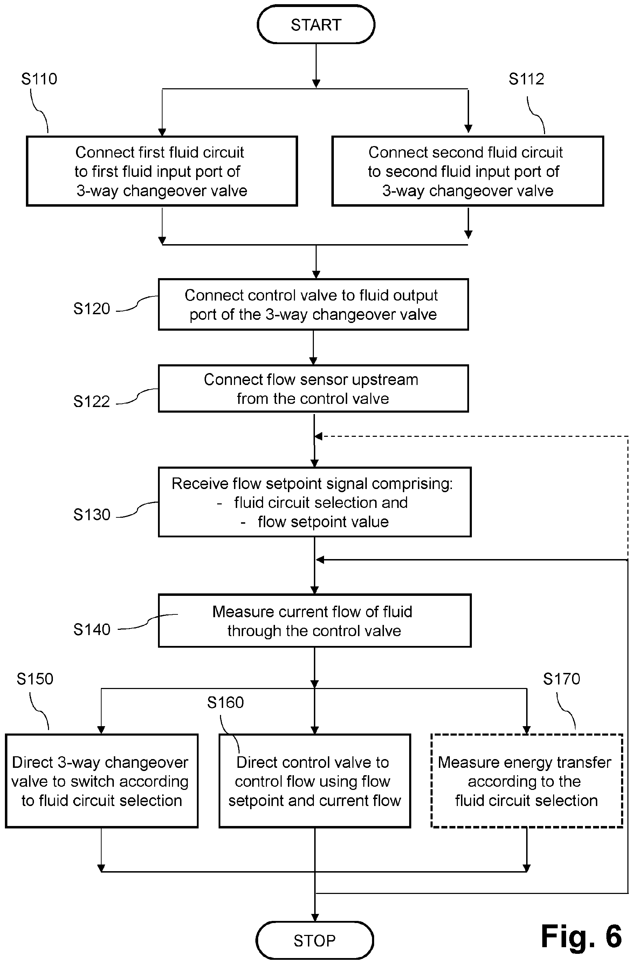

Figure 6 shows a schematic flowchart of a method for selectively controlling a flow of fluid in either a first fluid circuit H or a second fluid circuit C of an HVAC system 100, according to the present disclosure. In preparatory steps S110 and S1 12 a first fluid circuit H and a second fluid circuit C are fluidically connected to a first fluid input port 11, respectively a second fluid input port I2 of a 3-way changeover valve 110'. In a further preparatory step S120, a control valve 134 is fluidically connected to a fluid output port O of the 3-way changeover valve 110'. In an even further preparatory step S122, a flow sensor 132 is arranged upstream from the control valve 134.

Following the preparatory steps, in a step S130 a flow setpoint signal is received by a controller 120, the flow setpoint signal comprising an indication of a fluid circuit selection and a flow setpoint value.

In a step S140, a current flow of fluid Φ through the control valve 134 is measured using a flow sensor 132 arranged upstream from the control valve 134.

Having received the flow setpoint signal, in a step S150, the controller directs the 3-way changeover valve 110' to switch between two fully open positionsfor fluidically connecting either the first fluid circuit H or the second fluid circuit C with the fluid output port O according to the fluid circuit selection. In a step S160, the controller 120 directs the control valve 134 to control the flow of fluid, using the flow setpoint value and the current flow of fluid Φ measured by the flow sensor 132.

Steps S140, S150, S160 and depending on circumstances S130 are carried out continuously, repeatedly for controlling a flow of fluid.

According to a particular embodiment, in step S150 the controller 120 extracts data indicating one of the first fluid circuit H or second fluid circuit C from the flow setpoint signal and generates a corresponding fluid circuit selection control signal, which when fed to the 3-way changeover valve 110', causes the 3-way changeover valve 110' to direct the flow of fluid to the selected one of the first fluid circuit H or second fluid circuit C.

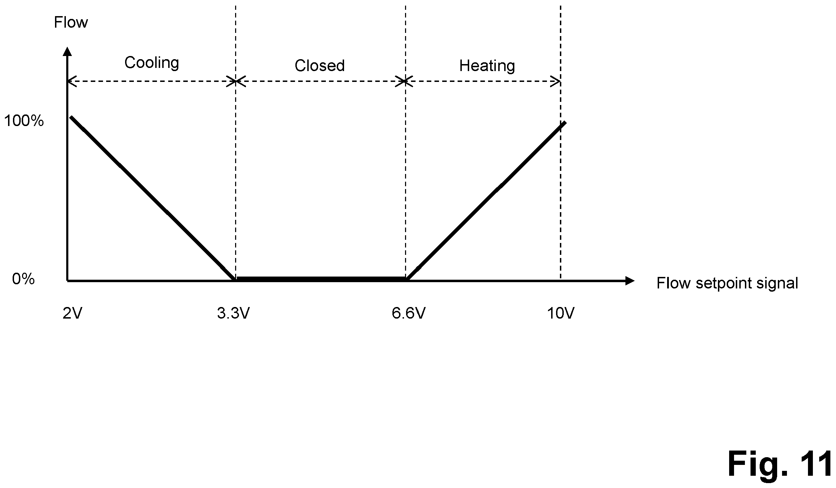

Similarly, in step S160, the controller 120 decodes the flow setpoint signal into a flow control signal and generates an analog flow control signal (such as a signal of a voltage or current based on a voltage to flow setpoint value mapping characteristic to the control valve) and/or a digital flow control signal (such as a digital signal comprising a binary representation of a numerical value based on a numerical value to flow setpoint value mapping characteristic to the control valve). For example, as illustrated on Figure 11, the flow setpoint signal is an analogue signal, a voltage ranging between 0 and 10V, wherein a voltage between 0V and 3.3 V corresponds to a fluid circuit selection of the second fluid circuit C (i.e. cooling), a voltage between 3.3V and 6.6V corresponds to a closed position of the 3-way changeover valve 110', while a voltage between 6.6V and 10V corresponds to a fluid circuit selection of the first fluid circuit H (i.e. heating). The various voltages in the ranges 0-3.3V respectively 6.6-10V being proportional to the flow setpoint value within a defined range (e.g. 1.1V representing a 66% of the maximum flow rate of the control valve e.g. a flow value of 6.6l/m, i.e. 66% within the range of 0l/m and 10l/m). Alternatively to a proportional mapping, a non-linear mapping may be advantageous, for example to compensate for non-linarites of the heat exchange characteristics of the heat exchanger 80. According to an even further embodiment, different non-linear mappings (between the flow setpoint signal and an opening of the 3-way valve) are configured for the first fluid circuit H and the second fluid circuit C, e.g. to account for different heat exchange characteristics in heating respectively cooling modes of operation.

According to a further embodiment, as shown on Figure 6 with dashed lines, in a step S170, the thermal energy transferred through either the first fluid circuit H or the second fluid circuit C is measured in accordance with the fluid circuit selection. If the first fluid circuit H is selected, a first amount of energy transfer (e.g. heating energy) through the first fluid circuit H is measured using the flow of fluid Φ measured by the flow sensor 132 and a temperature differential ΔT (measured, fixed or calculated) of the fluid between the fluid output port O and fluid return input port Rl. If the second fluid circuit C is selected, a second amount of energy transfer (e.g. cooling energy) through the second fluid circuit C is measured using the flow of fluid Φ measured by the flow sensor 132 and a temperature differential ΔT (measured, fixed or calculated) of the fluid between the fluid output port O and fluid return input port Rl. According to various embodiments, the temperature differential ΔT is determined based on measurement of the temperature of the fluid upstream and downstream of the heat exchanger 80. For example, the temperature of the fluid can be measured downstream of the heat exchanger 80 by the flow sensor 132 (being configured to determine the temperature of the fluid - in addition to measuring flow rate) and a second temperature sensor 150 (shown with dotted lines) arranged upstream of the heat exchanger 80.

Alternatively, (not shown on the figures), the temperature of the fluid is measured upstream of the heat exchanger 80 by the flow sensor 132 while the second temperature sensor being arranged downstream of the heat exchanger 80.

According to particular embodiments, the determination of the first and second amount of energy transfer is implemented in the flow sensor 134 and/or the controller 120 and output via a communication interface thereof.

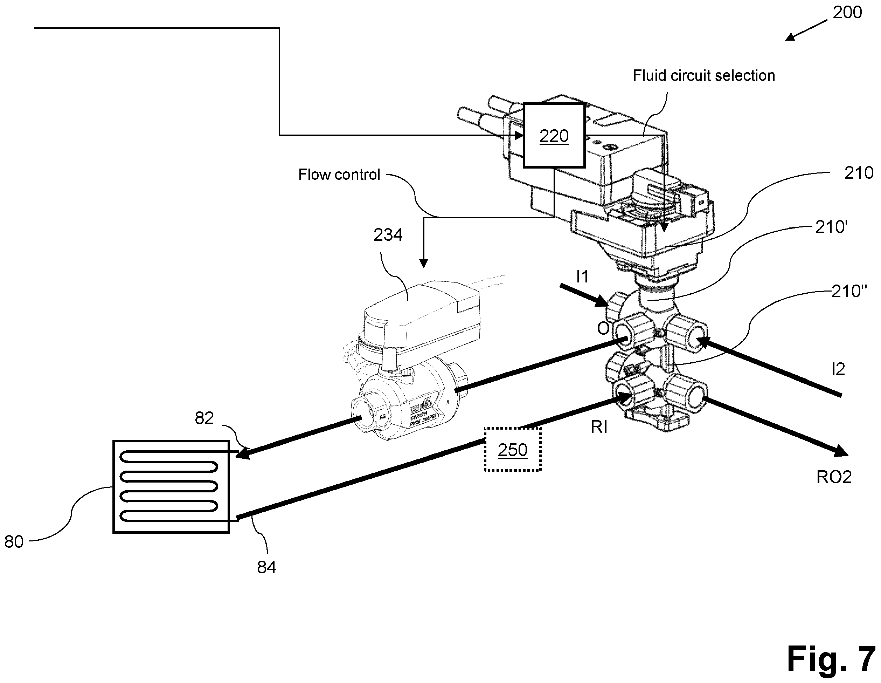

Turning now to Figure 7, a second aspect, further disclosed herein but different from the claimed subject-matter, shall be described. As shown on Figure 7, the flow control system 200 for selectively controlling a flow of fluid in either a first fluid circuit H or a second fluid circuit C of an HVAC system comprises a 3-way changeover valve 210', a pressure-independent control valve 234, and a controller 220. The pressure-independent control valve 234 is fluidically connected to the fluid output port O and configured to maintain a flow setpoint value at least irrespectively of a pressure of the fluid. The pressure-independent control valve 234 is configured to maintain an essentially constant fluid flow rate by mechanical means, in particular to maintain an essentially constant fluid flow rate by mechanical means for any given valve position.

In addition to receiving the flow setpoint signal and directing the 3-way changeover valve 210' to switch between the two open positions (for fluidically connecting either the first fluid circuit H or the second fluid circuit C) according to the fluid circuit selection control, the controller 210' is configured to direct the pressure-independent control valve 234 to control the flow of fluid according to the flow setpoint value.

The fluid circuit selection and flow control may be carried our according to multiple implementations.

In a first implementation, a signal carrying two data points is transmitted to the controller 220, one data point being indicative of the fluid circuit selection and the second data point being indicative of the flow setpoint value.

In a second implementation, the fluid circuit selection and the flow setpoint value are encoded into a single data point, the controller 220 being configured to decode the single data point and generate two control signals corresponding to the fluid circuit selection and the flow setpoint value for driving the changeover valve 210 and the control valve 234.

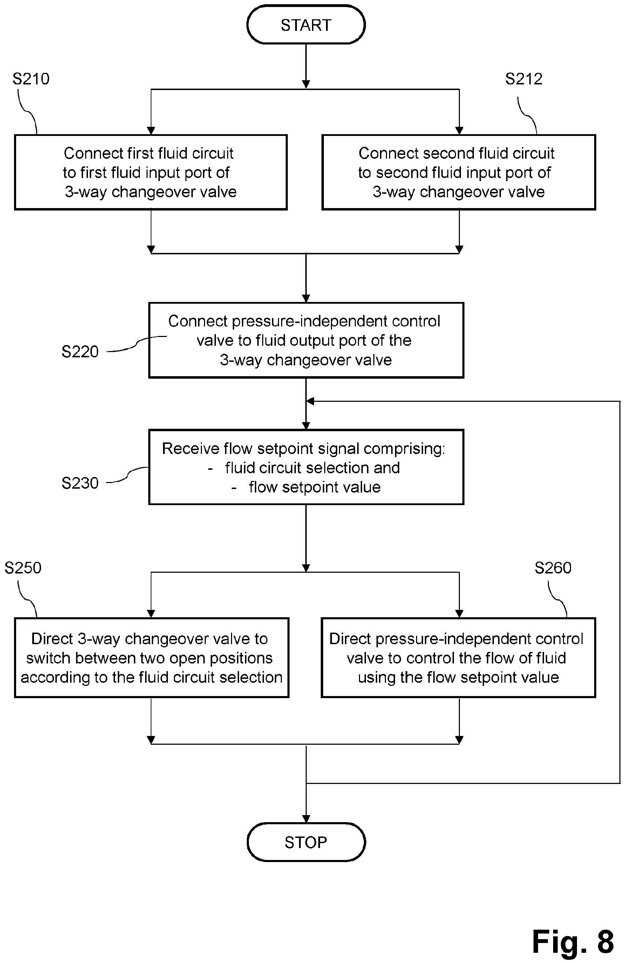

Figure 8 shows a schematic flowchart of a method for selectively controlling a flow of fluid in either a first fluid circuit H or a second fluid circuit C of an HVAC system 200, according to a second aspect, further disclosed herein but different from the claimed subject-matter. In preparatory steps S210 and S21 2 a first fluid circuit H and a second fluid circuit C are fluidically connected to a first fluid input port 11, respectively a second fluid input port I2 of a 3-way changeover valve 210'.

In a further preparatory step S220, a pressure-independent control valve 234, in particular a mechanical pressure-independent control valve 234, is fluidically connected to a fluid output port O of the 3-way changeover valve 210'.

Following the preparatory steps, in a step S230 a flow setpoint signal is received by a controller 220, the flow setpoint signal comprising an indication of a fluid circuit selection and a flow setpoint value.

Having received the flow setpoint signal, in a step S250, the controller directs the 3-way changeover valve 210' to switch between two open positions (in particular, two fully open positions) for fluidically connecting either the first fluid circuit H or the second fluid circuit C with the fluid output port O according to the fluid circuit selection. In a step S260, the controller 220 directs the pressure-independent control valve 234 to control the flow of fluid, using the flow setpoint value, the pressure-independent control valve 234 being configured to maintain an essentially constant fluid flow rate irrespectively of a pressure of the fluid.

Steps S230, S250, and S260 are carried out continuously, repeatedly for controlling a flow of fluid.

According to a particular embodiment, in step S250 the controller 220 extracts data indicating one of the first fluid circuit H or second fluid circuit C from the flow setpoint signal and generates a corresponding fluid circuit selection control signal, which when fed to the 3-way changeover valve 210', causes the 3-way changeover valve 210' to direct the flow of fluid to the selected one of the first fluid circuit H or second fluid circuit C. Similarly, in step S260, the controller 220 decodes the flow setpoint signal into a flow control signal and generates an analog flow control signal (such as a signal of a voltage or current based on a voltage to flow setpoint value mapping characteristic to the control valve) and/or a digital flow control signal (such as a digital signal comprising a binary representation of a numerical value based on a numerical value to flow setpoint value mapping characteristic to the control valve). For example, as illustrated on Figure 11, the flow setpoint signal is analogue signal, a voltage ranging between 0 and 10V, wherein a voltage between 0V and 3.3 V corresponds to a fluid circuit selection of the second fluid circuit C (i.e. cooling), a voltage between 3.3V and 6.6V corresponds to a closed position of the 3-way changeover valve 110', while a voltage between 6.6V and 10Vcorresponds to a fluid circuit selection of the first fluid circuit H (i.e. heating). The various voltages in the ranges 0-3.3V respectively 6.6-10V being proportional to the opening of the control valve or proportional to the flow setpoint value within a defined range (e.g. 1.1V representing a 66% opening of the control valve or a flow value of 6.6l/m, i.e. 66% within the range of 0l/m and 10l/m). Alternatively to a proportional mapping, a non-linear mapping may be advantageous, for example to compensate for non-linarites of the heat exchange characteristics of the heat exchanger 80. According to an even further embodiment, different non-linear mappings (between the flow setpoint signal and an opening of the 3-way changeover valve) are configured for the first fluid circuit H and the second fluid circuit C, e.g. to account for different heat exchange characteristics in heating respectively cooling modes of operation.

According to an aspect 12, disclosed herein - but different from the claimed subject-matter - is a flow control system 200 for selectively controlling a flow of fluid in either a first fluid circuit H or a second fluid circuit C of a Heating, Ventilating and Air Conditioning HVAC system, comprising:
- a 3-way changeover valve 210' comprising a first fluid input port I1 fluidically connectable to the first fluid circuit H, a second fluid input port I2 fluidically connectable to the second fluid circuit C, and a fluid output port O;
- a pressure-independent control valve 234, in particular a mechanical pressure-independent control valve 234, fluidically connected to the fluid output port O; and
- a controller 220 configured to:
- receive a flow setpoint signal, the flow setpoint signal comprising an indication of a fluid circuit selection and a flow setpoint value;
- direct the 3-way changeover valve 210' to switch between two open positions for fluidically connecting either the first fluid circuit H or the second fluid circuit C with the fluid output port O according to the fluid circuit selection control; and
- direct the pressure-independent control valve 234 to control the flow of fluid according to the flow setpoint value.

According to an aspect 13, disclosed herein- but different from the claimed subject-matter - is a flow control system 200 according to aspect 12, further comprising a second 3-way changeover valve 210" comprising a fluid return input port RI fluidically connected to the control valve 234; a first fluid return output port RO1 fluidically connectable to the first fluid circuit H and a second fluid return output port RO2 fluidically connectable to the second fluid circuit C, wherein the controller 220 is further configured to switch the second 3-way changeover valve 210" between two open positions for fluidically connecting either the first fluid circuit H or the second fluid circuit C with the fluid return input port Rl.

According to an aspect 14, disclosed herein - but different from the claimed subject-matter - is the flow control system 200 according to aspect 13, wherein the 3-way changeover valve 210' is mechanically coupled with the second 3-way changeover valve 210" to form a 6-way changeover valve 210, configured such that switching the 3-way changeover valve 210' to fluidically connect a selected one of the first fluid circuit H or second fluid circuit C with the fluid output port O of the 3-way changeover valve 210' causes the second 3-way changeover valve 210" to fluidically connect the selected one of the first fluid circuit H or the second fluid circuit C with the fluid return input port Rl.

According to an aspect 15, disclosed herein - but different from the claimed subject-matter - is the flow control system 200 according to one of the aspects 12 to 14, wherein the controller 220 is configurable to reverse the switching between the two open positions of the 3-way changeover valve 210' and/or the second 3-way changeover valve 210".

According to an aspect 16, disclosed herein - but different from the claimed subject-matter - is a method for selectively controlling a flow of fluid in either a first fluid circuit H or a second fluid circuit C of a Heating, Ventilating and Air Conditioning HVAC system, comprising:
- fluidically connecting a first fluid circuit H and a second fluid circuit C to a first fluid input port 11, respectively a second fluid input port I2 of a 3-way changeover valve 210';
- fluidically connecting a pressure-independent control valve 234, in particular a mechanical pressure-independent control valve 234, to a fluid output port O of the 3-way changeover valve 210';
- receiving, by a controller 220, a flow setpoint signal, the flow setpoint signal comprising an indication of a fluid circuit selection and a flow setpoint value;
- directing, by the controller 220, the 3-way changeover valve 210'to switch between two open positions for fluidically connecting either the first fluid circuit H or the second fluid circuit C with the fluid output port O according to the fluid circuit selection; and
- directing, by the controller 220, the pressure-independent control valve 234 to control the flow of fluid according to the flow setpoint value.

According to an aspect 17, disclosed herein - but different from the claimed subject-matter - the method according to aspect 16, further comprising:
- fluidically connecting a fluid return input port RI of a second 3-way changeover valve 110" to the control valve 234;
- fluidically connecting the first fluid circuit H and the second fluid circuit C to a first fluid return output port RO1, respectively a second fluid return output port RO2 of the second 3-way changeover valve 210"; and
- directing, by the controller 220, the second 3-way changeover valve 210" to switch between two open positions for fluidically connecting either the first fluid circuit H or the second fluid circuit C with the fluid return input port Rl.

According to an aspect 18, disclosed herein - but different from the claimed subject-matter - is the method according to one of the aspects 16 or 17, further comprising reversing the switching between the two open positions of the 3-way changeover valve 210' and/or the second 3-way changeover valve 210".

According to an aspect 19, disclosed herein- but different from the claimed subject-matter - is a controller 220 comprising a processor configured to selectively control a flow of fluid in either a first fluid circuit H or a second fluid circuit C of a Heating, Ventilating and Air Conditioning HVAC system using a flow control system 200 of one of the aspects 12 to 15 according to the method of one of the aspects 16 to 18.

According to an aspect 20, disclosed herein- but different from the claimed subject-matter - is a computer program product comprising instructions, which when executed by a controller 220 according to aspect 19, cause the controller 220 to carry out the method according to one of the aspects 16 to 18.

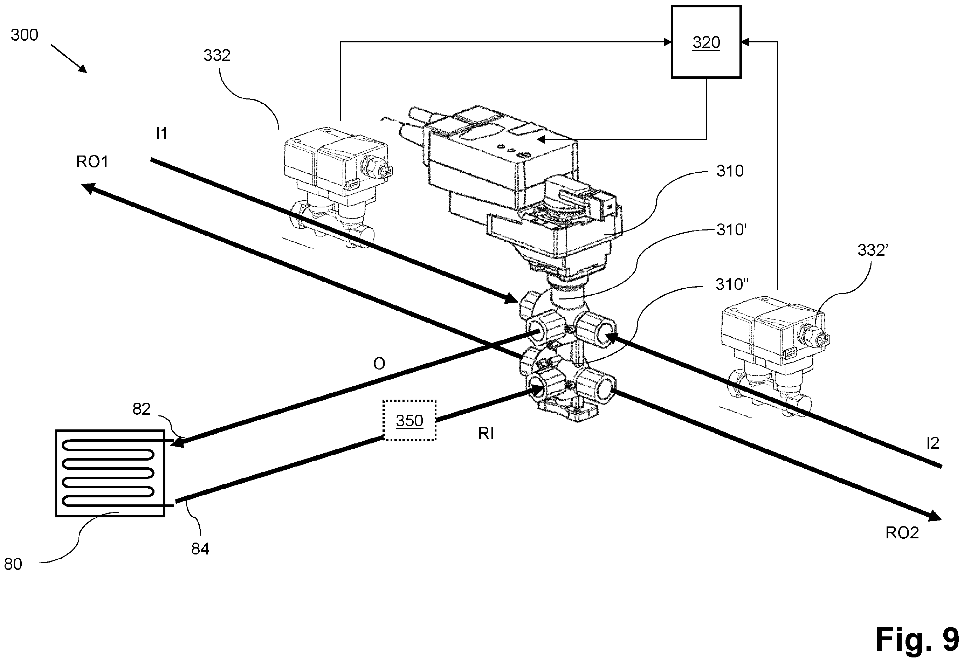

Turning now to Figure 9, a third aspect, further disclosed herein but different from the claimed subject-matter, shall be described. As shown on Figure 9, the flow control system 300, for selectively controlling a flow of fluid in either a first fluid circuit H or a second fluid circuit C of an HVAC system, comprises a 6-way valve 310 incorporating a 3-way valve 310' and a mechanically connected second 3-way valve 310". The 3-way valve 310' - of the 6-way valve 310 - comprises a first fluid input port I1 fluidically connectable to the first fluid circuit H, a second fluid input port I2 fluidically connectable to the second fluid circuit C, and a fluid output port O fluidically connectable to a fluid input side 82 of a heat exchanger 80. The second 3-way valve 310" - of the 6-way valve 310 - comprises a fluid return input port RI connectable to a fluid output side 84 of a heat exchanger 80; a first fluid return output port RO1 fluidically connectable to the first fluid circuit H and a second fluid return output port RO2 fluidically connectable to the second fluid circuit C. A first flow sensor 332 is arranged upstream of the first fluid input port I1 of the 3-way valve 310'and configured to measure a current flow of fluid Φ at the first fluid input port I1 of the 3-way valve 310'. A second flow sensor 332' is arranged upstream of the second fluid input port I2 of the 3-way valve 310' and configured to measure a current flow of fluid Φ at the second fluid input port I2 of the 3-way valve 310'.

The flow control system 300 further comprises a controller 320. The controller 320 is configured to receive a flow setpoint signal, the flow setpoint signal comprising an indication of a fluid circuit selection and a flow setpoint value. For example, the flow setpoint signal may indicate a fluid flow setpoint value for heating or cooling.

Based on the flow setpoint signal, the controller is configured to drive the 3-way valve 310' and the second 3-way valve 310" to fluidically connect the first fluid circuit H with the fluid output O respectively with the fluid return input port RI and to regulate the flow of fluid using the 3-way valve 310' and/or the second 3-way valve 310" in accordance with the flow setpoint signal and the flow of fluid Φ measured by the first flow sensor 332. If the second fluid circuit is selected (by the fluid circuit selection), the controller is configured to drive the 3-way valve 310' and the second 3-way valve 310" to fluidically connect the second fluid circuit C with the fluid output O respectively with the fluid return input port Rl, and to regulate the flow of fluid using the 3-way valve 310' and/or the second 3-way valve 310" in accordance with the flow setpoint signal and the flow of fluid Φ measured by the second flow sensor 332'.

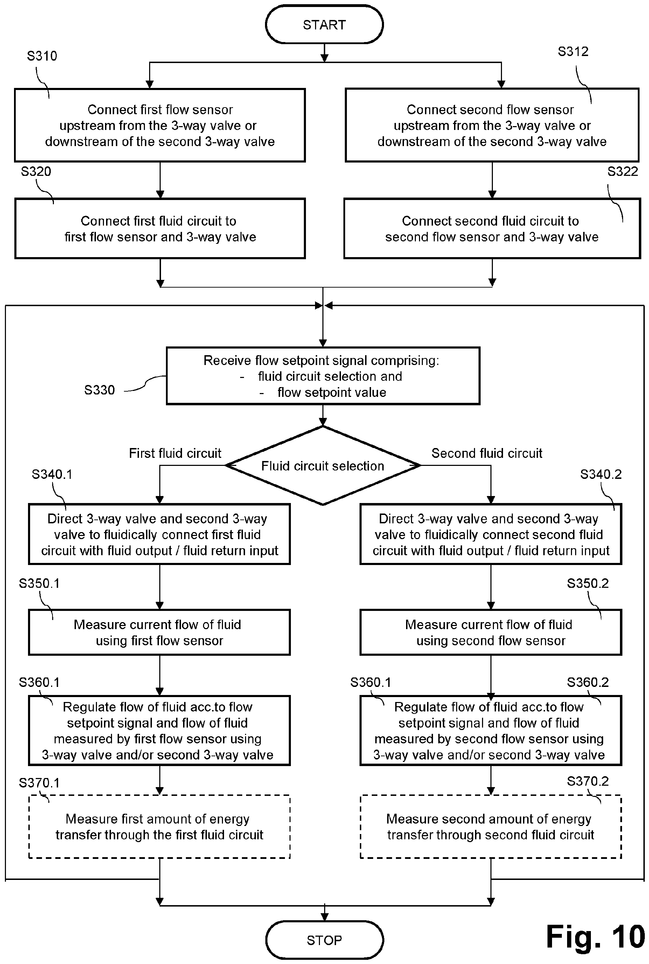

Figure 10 shows a schematic flowchart of a method for selectively controlling a flow of fluid in either a first fluid circuit H or a second fluid circuit C of an HVAC system 300, according to the third aspect, further disclosed herein but different from the claimed subject-matter.

In a preparatory step S310,the first flow sensor 332 is arranged at the first fluid input port I1 upstream from the 3-way valve 310'. In a further preparatory step S320, the first fluid circuit H is connected to the first flow sensor 332 and a first fluid return output port RO1 of the second 3-way valve 310". Alternatively, in preparatory step S310, the first flow sensor 332 is arranged at the first fluid return output port RO1 downstream from the second 3-way valve 310" and in step S320 the first fluid circuit H is connected to the first flow sensor 332 and a first fluid input port I1 of the 3-way valve 310'.

In a preparatory step S312, the second flow sensor 332' is arranged at the second fluid input port I2 upstream from the 3-way valve 310'. In a further preparatory step S322, the second fluid circuit C is connected to the second flow sensor 332' and a second fluid return output port RO2 of the second 3-way valve 310".Alternatively, in preparatory step S31 2, the second flow sensor 332' is arranged at the second fluid return output port RO2 downstream from the second 3-way valve 310" and in step S320 the first fluid circuit H is connected to the first flow sensor 332 and a first fluid input port I1 of the 3-way valve 310'.Following the preparatory steps, in a step S330 a flow setpoint signal is received by the controller 320, the flow setpoint signal comprising an indication of a fluid circuit selection and a flow setpoint value.

In accordance with the fluid circuit selection, if the first fluid circuit is selected:
In a step 5340.1 , the controller 320 drives the 3-way valve 310' to fluidically connect the first fluid circuit H with the fluid output port O and drives the second 3-way valve 310" to fluidically connect the first fluid circuit H with the fluid return input port Rl;
In a step S350.1, the current flow of fluid Φ is measured at the first fluid input port 11 of the 3-way valve 310' using the first flow sensor 332; and
In a step S360.1 , the flow of fluid is regulated by the 3-way valve 310' and/or the second 3-way valve 310" using the flow setpoint signal and the flow of fluid Φ measured by the first flow sensor 332.

In accordance with the fluid circuit selection, if the second fluid circuit is selected:
In a step S340.2, the controller 320 drives the 3-way valve 310'tofluidically connect the second fluid circuit C with the fluid output port O and drives the second 3-way valve 310" to fluidically connect the second fluid circuit C with the fluid return input port Rl;
In a step S350.2, the current flow of fluid Φ is measured at the second fluid input port I2 of the 3-way valve 310' using the second flow sensor 332'; and
In a step S360.2, the flow of fluid is regulated by the 3-way valve 310' and/or the second 3-way valve 310" using the flow setpoint signal and the flow of fluid Φ measured by the second flow sensor 332'.

Steps S340.1, S350.1 and S360.1, respectively steps S340.2, S350.2 and S360.2 are carried out continuously, repeatedly for controlling a flow of fluid.

According to a further embodiment, as shown on Figure 10 with dashed lines, the thermal energy transferred through either the first fluid circuit H or the second fluid circuit C is measured in accordance with the fluid circuit selection. If the first fluid circuit H is selected, in a step S370.1, a first amount of energy transfer (e.g. heating energy) through the first fluid circuit H is measured using the flow of fluid Φ measured by the first flow sensor 332 and a temperature differential ΔT (measured, fixed or calculated) of the fluid between the fluid output port O and fluid return input port Rl. If the second fluid circuit C is selected, in a step S370.2, a second amount of energy transfer (e.g. cooling energy) through the second fluid circuit C is measured using the flow of fluid Φ measured by the second flow sensor 332' and a temperature differential ΔT (measured, fixed or calculated) of the fluid between the fluid output port O and fluid return input port Rl.

According to various embodiments, the temperature differential ΔT is determined based on measurement of the temperature of the fluid upstream and downstream of the heat exchanger 80. For example, the temperature of the fluid can be measured upstream of the heat exchanger 80 by the flow sensor 332 respectively the second flow sensor 332' (each being configured to determine the temperature of the fluid - in addition to measuring its flow rate) and a second temperature sensor 350 (shown with dotted lines) arranged downstream of the heat exchanger 80.

Alternatively, the temperature of the fluid is measured downstream of the heat exchanger 80 by the flow sensor 332 respectively the second flow sensor 332' (each being configured to determine the temperature of the fluid - in addition to measuring its flow rate) and a second temperature sensor arranged upstream of the heat exchanger 80.

The thermal energy transferred is made available by the first or second flow sensors 332, 332'via a communication interface thereof.

According to a particular embodiment, in steps S340.1 and 340.2 the controller 320 extracts data indicating one of the first fluid circuit H or second fluid circuit C from the flow setpoint signal and generates a corresponding fluid circuit selection control signal, which when fed to the 3-way valve 310' respectively the second 3-way valve 310", causes the 3-way valve 310' respectively the second 3-way valve 310" to direct the flow of fluid to the selected one of thefirstfluid circuit H or second fluid circuit C. Similarly, in steps S360.1 and S360.2, the controller 220 decodes the flow setpoint signal into a flow control signal and generates an analog flow control signal (such as a signal of a voltage or current based on a voltage to flow setpoint value mapping characteristic to the control valve) and/or a digital flow control signal (such as a digital signal comprising a binary representation of a numerical value based on a numerical value to flow setpoint value mapping characteristic to the control valve). For example, as illustrated on Figure 11, the flow setpoint signal is an analogue signal, a voltage ranging between 0 and 10V, wherein a voltage between 0V and 3.3 V corresponds to a fluid circuit selection of the second fluid circuit C (i.e. cooling), a voltage between 3.3V and 6.6V corresponds to a closed position of the 3-way changeover valve 110', while a voltage between 6.6V and 10V corresponds to a fluid circuit selection of the first fluid circuit H (i.e. heating). The various voltages in the ranges 0-3.3V respectively 6.6-10V being proportional to the opening of the control valve or proportional to the flow setpoint value within a defined range (e.g. 1.1V representing a 66% opening of the control valve or a flow value of 6.6l/m, i.e. 66% within the range of 0l/m and 10l/m). Alternatively to a proportional mapping, a non-linear mapping may be advantageous, for example to compensate for non-linarites of the heat exchange characteristics of the heat exchanger 80. According to an even further embodiment, different non-linear mappings (between the flow setpoint signal and an opening of the 3-way changeover valve) are configured for the first fluid circuit H and the second fluid circuit C, e.g. to account for different heat exchange characteristics in heating respectively cooling modes of operation.

According to an aspect 21, disclosed herein - but different from the claimed subject-matter - is a flow control system 300 for selectively controlling a flow of fluid in either a first fluid circuit H or a second fluid circuit C of a Heating, Ventilating and Air Conditioning HVAC system, comprising:
- a 3-way valve 310' comprising a first fluid input port I1 fluidically connectable to the first fluid circuit H, a second fluid input port I2 fluidically connectable to the second fluid circuit C, and a fluid output port O;
- a second 3-way valve 310" comprising a fluid return input port RI; a first fluid return output port RO1 fluidically connectable to the first fluid circuit H and a second fluid return output port RO2 fluidically connectable to the second fluid circuit C;
- a first flow sensor 332 configured to measure a current flow of fluid Φ at the first fluid input port I1 of the 3-way valve 310'or at the first fluid return output port RO1 of the second 3-way valve 310";
- a second flow sensor 332' configured to measure a current flow of fluid Φ at the second fluid input port I2 of the 3-way valve 310' or at the second fluid return output port RO2 of the second 3-way valve 310";
- a controller 320 configured to receive a flow setpoint signal and to:
- drive the 3-way valve 310' and the second 3-way valve 310" to fluidically connect the first fluid circuit H with the fluid output port O respectively with the fluid return input port Rl, and to regulate the flow of fluid using the 3-way valve 310' and/or the second 3-way valve 310" in accordance with the flow setpoint signal and the flow of fluid Φ measured by the first flow sensor 332; or
- drive the 3-way valve 310' and the second 3-way valve 310" to fluidically connect the second fluid circuit C with the fluid output port O respectively with the fluid return input port RI, and to regulate the flow of fluid using the 3-way valve 310' and/or the second 3-way valve 310" in accordance with the flow setpoint signal and the flow of fluid Φ measured by the second flow sensor 332'.

According to an aspect 22, disclosed herein - but different from the claimed subject-matter - is the flow control system 300 according to aspect 21, wherein the 3-way valve 310' is mechanically coupled with the second 3-way valve 310" to form a 6-way valve 310, configured such that switching the 3-way valve 310' to fluidically connect a selected one of the first fluid circuit H or second fluid circuit C with the fluid output port O of the 3-way valve 310' causes the second 3-way valve 310" to fluidically connect the selected one of the first fluid circuit H or the second fluid circuit C with the fluid return input port Rl.

According to an aspect 23, disclosed herein - but different from the claimed subject-matter - is the flow control system 300 according to one of the aspects 21 or 22, wherein the controller 320 is configurable to reverse the switching between the two open positions of the 3-way valve 310'and/or the second 3-way valve 310".

According to an aspect 24, disclosed herein - but different from the claimed subject-matter - is a method for selectively controlling a flow of fluid in either a first fluid circuit H or a second fluid circuit C of a Heating, Ventilating and Air Conditioning HVAC system, comprising:
- fluidically connecting the first fluid circuit H and the second fluid circuit C to a first fluid input port 11, respectively a second fluid input port I2 of a 3-way valve 310'and a first fluid return output port RO1, respectively a second fluid return output port RO2 of a second 3-way valve 310";
- providing a first flow sensor 332 configured to measure a current flow of fluid Φ at the first fluid input port I1 of the 3-way valve 310' or at the first fluid return output port RO1 of the second 3-way valve 310";
- providing a second flow sensor 332' configured to measure a current flow of fluid Φ at the second fluid input port I2 of the 3-way valve 310' or at the second fluid return output port RO2 of the second 3-way valve 310";
- receiving, by a controller 320, a flow setpoint signal, the flow setpoint signal comprising an indication of a fluid circuit selection and a flow setpoint value;
- in accordance with the fluid circuit selection:
- the controller 320 driving the 3-way valve 310' and the second 3-way valve 310" to fluidically connect the first fluid circuit H with the fluid output port O respectively with the fluid return input port RI, and regulating the flow of fluid using the 3-way valve 310' and/or the second 3-way valve 310" in accordance with the flow setpoint signal and the flow of fluid □ measured by the first flow sensor 332; or
- the controller 320 driving the 3-way valve 310' and the second 3-way valve 310" to fluidically connect the second fluid circuit C with the fluid output port O respectively with the fluid return input port RI, and regulating the flow of fluid using the 3-way valve 310' and/or the second 3-way valve 310" in accordance with the flow setpoint signal and the flow of fluid Φ measured by the second flow sensor 332'.

According to an aspect 25, disclosed herein - but different from the claimed subject-matter - is the method according to aspect 24, further comprising:
- measuring a first amount of energy transfer through the first fluid circuit H using the flow of fluid Φ measured by the first flow sensor 332 and a temperature differential of the fluid between the fluid output port O and fluid return input port Rl; and/or
- measuring a second amount of energy transfer through the second fluid circuit C using the flow of fluid Φ measured by the second flow sensor 332' and a temperature differential of the fluid between the fluid output port O and fluid return input port RI,
in accordance with the fluid circuit selection.

According to an aspect 26, disclosed herein - but different from the claimed subject-matter - is controller 320 comprising a processor configured to selectively control a flow of fluid in either a first fluid circuit H or a second fluid circuit C of a Heating, Ventilating and Air Conditioning HVAC system using a flow control system 300 of one of the aspects 21 to 24 according to the method of one of the aspects 24 or 25.

According to an aspect 27, disclosed herein - but different from the claimed subject-matter - is a computer program product comprising instructions, which when executed by a controller 320 according to aspect 28, cause the controller 320 to carry out the method according to one of the aspects 24 or 25.

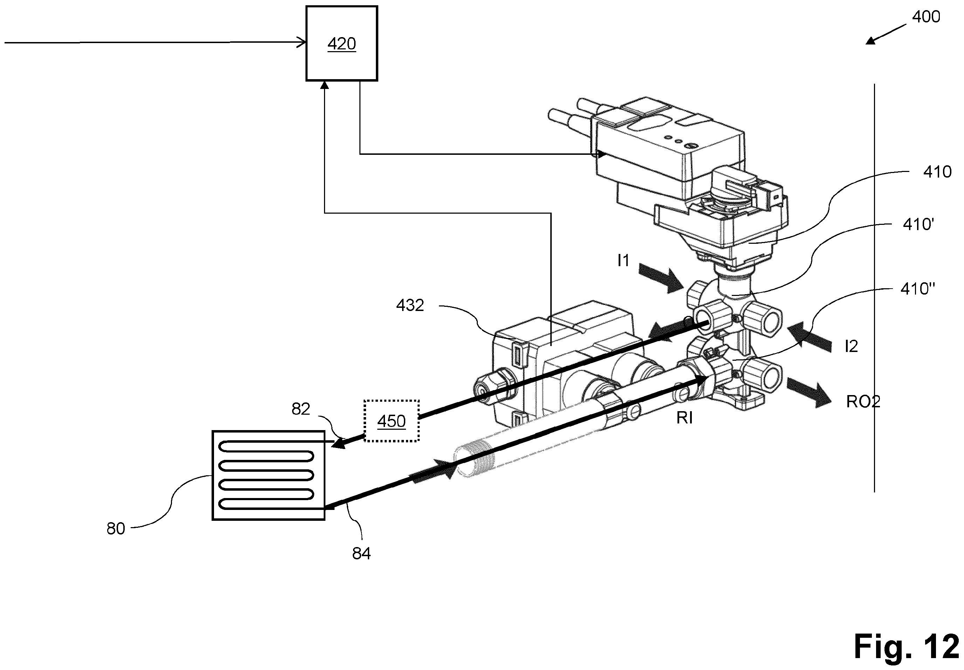

Figure 12 depicts a first embodiment of a flow limiting system 400 for selectively limiting a flow of fluid in either a first fluid circuit H or a second fluid circuit C of an HVAC system, according to a fourth aspect, further disclosed herein but different from the claimed subject-matter. In contrast to the first, second and third aspects, the present, the flow limiting system 400 is configured not to regulate, but to limit the maximum flow of fluid.

The flow limiting system 400 comprisinga 6-way control valve 410; a flow sensor 432 configured to measure a current flow of fluid Φ through the fluid output port O of the 6-way control valve 410; and a controller 420. The controller 420 is configured to switch the 6-way control valve 410 between fluidically connecting either the first fluid circuit H or the second fluid circuit C with the fluid output port O, respectively the first fluid circuit H or the second fluid circuit C with the fluid return input port Rl. A setpoint valve position and a maximum flow value is received by the controller 420. Furthermore, the controller 420 is configured to drive the 3-way control valve 410' to the setpoint valve position. If the flow of fluid Φ measured by the flow sensor 432 is equal to or greater than the maximum flow value, the controller 420 directs the 6-way control valve 410 to maintain its current position. Alternatively, or additionally, if the flow of fluid Φ measured by the flow sensor 432 is equal to or greater than the maximum flow value, the controller 420 directs the 6-way control valve 410 to reduce the setpoint valve position and to drive the 6-way control valve 410 to the thereby reduced setpoint valve position.

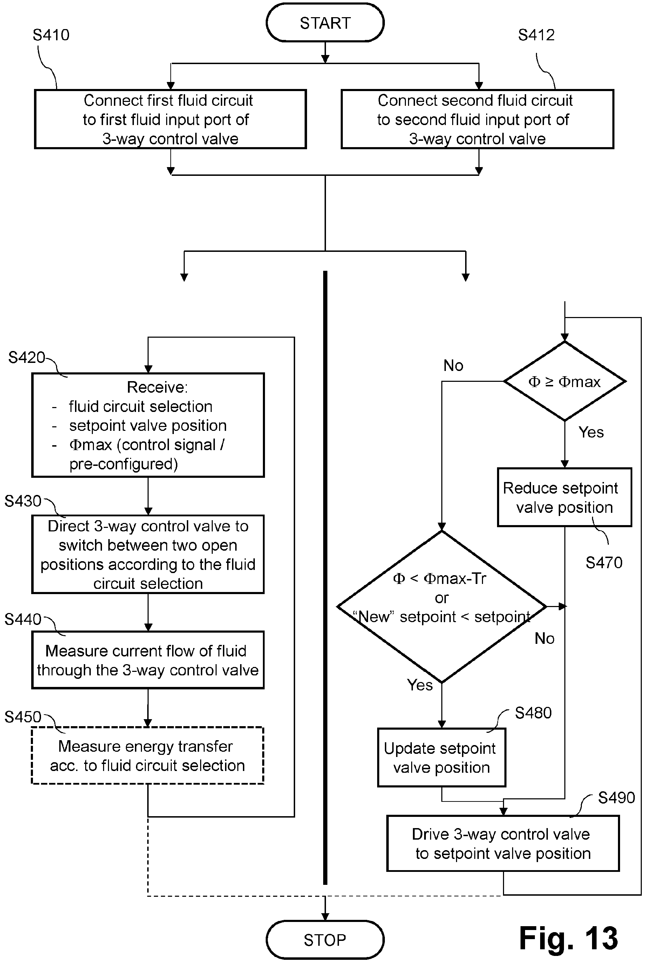

Figure 13 shows a schematic flowchart of a method for selectively controlling a flow of fluid in either a first fluid circuit H or a second fluid circuit C of an HVAC system 100, according to the fourth aspect, further disclosed herein but different from the claimed subject-matter. In preparatory steps S410 and S412 a firstfluid circuit H and a second fluid circuit C are fluidically connected to a first fluid input port 11, respectively a second fluid input port I2 of a 3-way control valve 410'.

Following the preparatory steps S410 and S41 2, the sequence of steps S420, S430 and S440 (optionally also step S450) is repeatedly executed - for the entire operation of the selective flow control, until the occurrence of an error and/or until the process is stopped.

In a step S420, a setpoint valve position, a maximum flow value Φmax and/or an indication of a fluid circuit selection are received by the controller 420. The maximum flow value Φmax is received as part of a configuration process - e.g. as a configuration parameter. Alternatively, or additionally, the controller 420 may be configured to receive the maximum flow value Φmax as an input signal, e.g. through a communication interface.

Thereafter in step S430, the 3-way control valve 410' is directed by the controller 420 to switch between fluidically connecting either the first fluid circuit H or the second fluid circuit C with the fluid output port O according to the fluid circuit selection. In a subsequent step S440 a current flow of fluid Φ through a fluid output port O of the 3-way control valve 410' is measured using a flow sensor 432.

The sequence of steps S470, S480 and S490 is executed repeatedly, parallel to the sequence of steps S420, S430 and S440 (optionally also step S450). If the flow of fluid Φ measured by the flow sensor 432 is equal to or greater than the maximum flow value Φmax, in a step S470 the setpoint valve position is reduced and, in a step S490, the 3-way control valve 410' is driven to the (thereby reduced) setpoint valve position.

If the flow of fluid Φ measured by the flow sensor 432 is smaller than the maximum flow value Φmax, in a step S480, the setpoint valve position is updated with a newly received external setpoint valve position if the newly received external setpoint valve position is smaller than the (actual) setpoint valve position or if the flow of fluid Φ measured by the flow sensor 432 is smaller than the maximum flow value Φmax by a threshold margin Tr (e.g. 5% of Φmax). Thereafter, in a step S490, the 3-way control valve 410' is driven to the (thereby updated) setpoint valve position.

According to a further embodiment, as shown on Figure 13 with dashed lines, in a step S450, the thermal energy transferred through either the first fluid circuit H or the second fluid circuit C is measured in accordance with the fluid circuit selection. If the first fluid circuit H is selected, a first amount of energy transfer (e.g. heating energy) through the first fluid circuit H is measured using the flow of fluid Φ measured by the flow sensor 432 and a temperature differential ΔT (measured, fixed or calculated) of the fluid between the fluid output port O and fluid return input port Rl. If the second fluid circuit C is selected, a second amount of energy transfer (e.g. cooling energy) through the second fluid circuit C is measured using the flow of fluid Φ measured by the flow sensor 432 and a temperature differential ΔT (measured, fixed or calculated) of the fluid between the fluid output port O and fluid return input port Rl. According to various embodiments, the temperature differential ΔT is determined based on measurement of the temperature of the fluid upstream and downstream of the heat exchanger 80. For example, the temperature of the fluid can be measured upstream of the heat exchanger 80 by the flow sensor 432 (being configured to determine the temperature of the fluid - in addition to measuring flow rate) and a second temperature sensor 450 (shown with dotted lines) arranged downstream of the heat exchanger 80.

Alternatively, (not shown on the figures), the temperature of the fluid is measured downstream of the heat exchanger 80 by the flow sensor 432 while the second temperature sensor being arranged upstream of the heat exchanger 80.

According to particular embodiments, the determination of the first and second amount of energy transfer is implemented in the flow sensor 434 and/or the controller 420 20 and output via a communication interface thereof.

According to an aspect 28, disclosed herein - but different from the claimed subject-matter - is a flow limiting system 400 for selectively limiting a flow of fluid in either a first fluid circuit H or a second fluid circuit C of a Heating, Ventilating and Air Conditioning HVAC system, comprising:
- a 3-way control valve 410' comprising a first fluid input port I1 fluidically connectable to the first fluid circuit H, a second fluid input port I2 fluidically connectable to the second fluid circuit C, and a fluid output port O;
- a flow sensor 432 configured to measure a current flow of fluid Φ through the fluid output port O; and
- a controller 420 configured:
   - to receive a setpoint valve position, a maximum flow value and an indication of a fluid circuit selection;
- direct the 3-way control valve 410' to switch between fluidically connecting either the first fluid circuit H or the second fluid circuit C with the fluid output port O according to the fluid circuit selection;
- to drive the 3-way control valve 410' to the setpoint valve position value; and
- if the flow of fluid Φ measured by the flow sensor 432 is equal to or greater than the maximum flow value:
- to direct the 3-way control valve 410' to maintain a current position; or
- to reduce the setpoint valve position and to drive the 3-way control valve 410' to the thereby reduced setpoint valve position.

According to an aspect 29, disclosed herein - but different from the claimed subject-matter - is the flow limiting system 400 according to aspect 28, further comprising a 3-way changeover valve 410" comprising a fluid return input port RI; a first fluid return output port RO1 fluidically connectable to the first fluid circuit H and a second fluid return output port RO2 fluidically connectable to the second fluid circuit C, wherein the controller 420 is further configured to switch the second 3-way changeover valve 410" between fluidically connecting either the first fluid circuit H or the second fluid circuit C with the fluid return input port Rl.

According to an aspect 30, disclosed herein - but different from the claimed subject-matter - is the flow limiting system 400 according to aspect 29, wherein the 3-way control valve 410' is mechanically coupled with the 3-way changeover valve 410" to form a 6-way control valve 410, configured such that switching the 3-way control valve 410' to fluidically connect a select one of the first fluid circuit H or second fluid circuit C with the fluid output port O of the 3-way control valve 410' causes the 3-way changeover valve 410" to fluidically connect the selected one of the first fluid circuit H or the second fluid circuit C with the fluid return input port Rl.

According to an aspect 31, disclosed herein - but different from the claimed subject-matter - is the flow limiting system 400 according to one of the aspects 28 to 30, wherein the controller 420 is configured to drive the 3-way control valve 410' to a newly received setpoint valve position only if the newly received setpoint valve position is smaller than the setpoint valve position or if the flow of fluid Φ measured by the flow sensor 432 is smaller than the maximum flow value Φmax by a threshold margin Tr.

According to an aspect 32, disclosed herein - but different from the claimed subject-matter - is a method for selectively limiting a flow of fluid in either a first fluid circuit H or a second fluid circuit C of a Heating, Ventilating and Air Conditioning HVAC system, comprising:
- fluidically connecting a first fluid circuit H and a second fluid circuit C to a first fluid input port 11, respectively a second fluid input port I2 of a 3-way control valve 410';
- receiving, by a controller 420, a setpoint valve position, a maximum flow value Φmax and an indication of a fluid circuit selection;
- directing, by the controller 420, the 3-way control valve 410' to switch between fluidically connecting either the first fluid circuit H or the second fluid circuit C with the fluid output port O according to the fluid circuit selection;
- driving, by the controller 420, the 3-way control valve 410' to the setpoint valve position;
- measuring a current flow of fluid Φ through a fluid output port O of the 3-way control valve 410' using a flow sensor 432; and
- if the flow of fluid Φ measured by the flow sensor 432 is equal to or greater than the maximum flow value Φmax:
- directing, by the controller 420, the 3-way control valve 410' to maintain a current position; or
- reducing the setpoint valve position and driving, by the controller 420, the 3-way control valve 410' to the thereby reduced setpoint valve position.

According to an aspect 33, disclosed herein - but different from the claimed subject-matter - is the method according to aspect 32, further comprising driving, by the controller 420, the 3-way control valve 410' to a newly received setpoint valve position only if the newly received setpoint valve position is smaller than the setpoint valve position or if the flow of fluid Φ measured by the flow sensor 432 is smaller than the maximum flow value Φmax by a threshold margin Tr.

According to an aspect 34, disclosed herein - but different from the claimed subject-matter - is the method according to aspect 32 or 33, further comprising:
- fluidically connecting the first fluid circuit H and the second fluid circuit C to a first fluid return output port RO1, respectively a second fluid return output port RO2 of a 3-way changeover valve 410"; and
- directing, by the controller 420the 3-way changeover valve 410" to switch between two open positions for fluidically connecting either the first fluid circuit H or the second fluid circuit C with the fluid return input port Rl.

According to an aspect 35, disclosed herein - but different from the claimed subject-matter - is the method according to one of the aspects 32 to 34, further comprising determining a first amount of energy transfer through the first fluid circuit H and/or a second amount of energy transfer through the second fluid circuit C using the flow of fluid Φ measured by the flow sensor 432 and a temperature differential of the fluid in accordance with the fluid circuit selection.

According to an aspect 36, disclosed herein - but different from the claimed subject-matter - is a controller 420 comprising a processor configured to selectively limit a flow of fluid in either a first fluid circuit H or a second fluid circuit C of a Heating, Ventilating and Air Conditioning HVAC system using a flow limiting system 400 of one of the aspects 28 to 31 according to the method of one of the aspects 32 to 35.

According to an aspect 37, disclosed herein - but different from the claimed subject-matter - is a computer program product comprising instructions, which when executed by a controller 420 according to aspect 36, cause the controller 420 to carry out the method according to one of the aspects 32 to 35.

**Reference list**

| | |
|---|---|
| fluid flow | Φ |
| maximum flow value | Φmax |
| temperature differential | ΔT |
| threshold margin | Tr |
| first fluid circuit | H |
| second fluid circuit | C |
| first fluid input port | I1 |
| second fluid input port | I2 |
| fluid output port | O |
| fluid return input port | RI |
| first fluid return output port | RO1 |
| second fluid return output port | RO2 |
| heat exchanger | 80 |
| fluid input side (of heat exchanger) | 82 |
| fluid return side (of heat exchanger) | 84 |
| flow control system (according to the present disclosure) | 100 |
| 6-way changeover valve (of flow control system 100) | 110 |
| 3-way changeover valve (of flow control system 100) | 110' |
| second 3-way changeover valve (of flow control system 100) | 110" |
| controller (of f low control system 100) | 120 |
| flow sensor (of flow control system 100) | 132 |
| control valve (of flow control system 100) | 134 |
| second temperature sensor (of flow limiting system 100) | 150 |
| flow control system (according to a second aspect further disclosed herein) | 200 |
| 6-way changeover valve (of flow control system 200) | 210 |
| 3-way changeover valve (of flow control system 200) | 210' |
| second 3-way changeover valve (of flow control system 200) | 210" |
| controller (of flow control system 200) | 220 |
| flow sensor (of flow control system 200) | 232 |
| control valve (of flow control system 200) | 234 |
| second temperature sensor (of flow limiting system 200) | 250 |
| flow control system (according to a third aspect further disclosed herein) | 300 |
| 6-way valve (of flow control system 300) | 310 |
| 3-way valve (of flow control system 300) | 310' |
| second 3-way valve (of flow control system 300) | 310" |
| controller (of flow control system 300) | 320 |
| first flow sensor (of flow control system 300) | 332 |
| second flow sensor (of flow control system 300) | 332' |
| flow limiting system (according to a fourth aspect further disclosed herein) | 400 |
| 6-way control valve (of flow limiting system 400) | 110 |
| 3-way control valve (of flow limiting system 400) | 410' |
| 3-way changeover valve (of flow limiting system 400) | 410" |
| controller (of flow limiting system 400) | 420 |
| flow sensor (of flow limiting system 400) | 432 |
| second temperature sensor (of flow limiting system 400) | 450 |

## Claims

1. A flow control system (100) for selectively controlling a flow of fluid in either a first fluid circuit (H) or a second fluid circuit (C) of a Heating, Ventilating and Air Conditioning HVAC system, comprising:
- a 3-way changeover valve (110') comprising a first fluid input port (I1) fluidically connectable to the first fluid circuit (H), a second fluid input port (I2) fluidically connectable to the second fluid circuit (C), and a fluid output port (O);
- a control valve (134) fluidically connected to the fluid output port (O);
- a flow sensor (132) configured to measure a current flow of fluid (Φ) through the control valve (134); and
- a controller (120) configured to:
- receive a flow setpoint signal, the flow setpoint signal comprising an indication of a fluid circuit selection and a flow setpoint value;
- direct the 3-way changeover valve (110') to switch between two fully open positions for fluidically connecting either the first fluid circuit (H) or the second fluid circuit (C) with the fluid output port (O) according to the fluid circuit selection, allowing a defined maximum fluid flow through the 3-way changeover valve (110'); and
- direct the control valve (134) to control the flow of fluid, using the flow setpoint value and the current flow of fluid (Φ) measured by the flow sensor (132),
**characterized in that** the flow sensor (1 32)is arranged upstream from the control valve (134).

2. The flow control system (100) according to claim 1, wherein the control valve (134) is a 3-way valve (134) having a fluid return input (RI) fluidically connected to the flow sensor (1 32), wherein the controller (120) is further configured to control the 3-way valve (134) such as to fluidically connect the fluid return input (RI) with either the first fluid circuit (H) or the second fluid circuit (C).

3. The flow control system (100) according to claim 1, further comprising a second 3-way changeover valve (110") comprising a fluid return input port (RI) fluidically connected to the control valve (134); a first fluid return output port (RO1 ) fluidically connectable to the first fluid circuit (H) and a second fluid return output port (RO2) fluidically connectable to the second fluid circuit (C), wherein the controller (120) is further configured to switch the second 3-way changeover valve (110") between two fully open positions for fluidically connecting either the first fluid circuit (H) or the second fluid circuit (C) with the fluid return input port (RI).

4. The flow control system (100) according to claim 3, wherein the 3-way changeover valve (110') is mechanically coupled with the second 3-way changeover valve (110") to form a 6-way changeover valve (110), configured such that switching the 3-way changeover valve (110') to fluidically connect a select one of the first fluid circuit (H) or second fluid circuit (C) with the fluid output port (O) of the 3-way changeover valve (110') causes the second 3-way changeover valve (110") to fluidically connect the selected one of the first fluid circuit (H) or the second fluid circuit (C) with the fluid return input port (RI).

5. The flow control system (100) according to one of the claims 1 to 4, wherein the controller (1 20) is configurable to reverse the switching between the two fully open positions of the 3-way changeover valve (110') and/or the second 3-way changeover valve (110").

6. A method for selectively controlling a flow of fluid in either a first fluid circuit (H) or a second fluid circuit (C) of a Heating, Ventilating and Air Conditioning HVAC system, comprising:
- fluidically connecting a first fluid circuit (H) and a second fluid circuit (C) to a first fluid input port (I1 ), respectively a second fluid input port (I2) of a 3-way changeover valve (110');
- fluidically connecting a control valve (134) to a fluid output port (O) of the 3-way changeover valve (110');
- receiving, by a controller (120), a flow setpoint signal, the flow setpoint signal comprising an indication of a fluid circuit selection and a flow setpoint value
- measuring a current flow of fluid (Φ) through the control valve (134) using a flow sensor (132) ;
- directing, by the controller (120), the 3-way changeover valve (110') to switch between two fully open positions for fluidically connecting either the first fluid circuit (H) or the second fluid circuit (C) with the fluid output port (O) according to the fluid circuit selection, allowing a defined maximum fluid flow through the 3-way changeover valve (110'); and
- directing, by the controller (120), the control valve (134) to control the flow of fluid, using the flow setpoint value and the current flow of fluid (Φ) measured by the flow sensor (132),
characterized that the flow sensor (132) is arranged upstream from the control valve (134).

7. The method according to claim 6, wherein the control valve (134) is a 3-way valve (134) having a fluid return input (RI), the method further comprising:
- fluidically connecting the fluid return input (RI) of the 3-way valve (134) to the flow sensor (132); and
- directing, by the controller (120), the 3-way valve (134) such as to fluidically connect the fluid return input (RI) with either the first fluid circuit (H) or the second fluid circuit (C).

8. The method according to claim 6, further comprising:
- fluidically connecting a fluid return input port (RI) of a second 3-way changeover valve (110") to the control valve (134);
- fluidically connecting the first fluid circuit (H) and the second fluid circuit (C) to a first fluid return output port (RO1), respectively a second fluid return output port (RO2) of the second 3-way changeover valve (110"); and
- directing, by the controller (120), the second 3-way changeover valve (110") to switch between two fully open positions for fluidically connecting either the first fluid circuit (H) or the second fluid circuit (C) with the fluid return input port (RI).

9. The method according to one of the claims 6 to 8, further comprising determining a first amount of energy transfer through the first fluid circuit (H) and/or a second amount of energy transfer through the second fluid circuit (C) using the flow of fluid (Φ) measured by the flow sensor (132) and a temperature differential of the fluid in accordance with the fluid circuit selection.

10. A controller (120) comprising a processor configured to selectively control a flow of fluid in either a first fluid circuit (H) or a second fluid circuit (C) of a Heating, Ventilating and Air Conditioning HVAC system using a flow control system (100) of one of the claims 1 to 5 according to the method of one of the claims 6 to 9.

11. A computer program product comprising instructions, which when executed by a controller (120) according to claim 10, cause the controller (120) to carry out the method according to one of the claims 6 to 9.

## Patentansprüche

1. Ein Durchflusssteuerungssystem (100) zur selektiven Kontrolle eines Fluidstroms in entweder einem ersten Fluidkreislauf (H) oder einem zweiten Fluidkreislauf (C) eines HLK-Systems für Heizung, Lüftung und Klimatisierung, umfassend:
- ein 3-Wege-Umschaltventil (110'), das einen ersten Fluideingangsanschluss (I1), der fluidisch mit dem ersten Fluidkreislauf (H) verbindbar ist, einen zweiten Fluideingangsanschluss (I2), der fluidisch mit dem zweiten Fluidkreislauf (C) verbindbar ist, und einen Fluidausgangsanschluss (O) umfasst;
- ein Regelventil (134), das fluidisch mit dem Fluidausgangsanschluss (O) verbunden ist;
- einen Durchflusssensor (132), der so konfiguriert ist, dass er einen aktuellen Fluidstrom (Φ ) durch das Regelventil (134) misst; und
- eine Steuereinheit (120), konfiguriert zum:
- Empfangen eines Durchflusssollwertsignals , wobei das Durchflusssollwertsignal eine Indikation für eine Auswahl des Fluidkreislaufs und einen Durchflusssollwert umfasst;
- Anweisendes 3-Wege-Umschaltventils (110'), zwischen zwei vollständig geöffneten Positionen zu schalten, um je nach Auswahl des Fluidkreislaufs entweder den ersten Fluidkreislauf (H) oder den zweiten Fluidkreislauf (C) mit dem Fluidausgangsanschluss (O) fluidisch zu verbinden, wobei ein definierter maximaler Fluidstrom durch das 3-Wege-Umschaltventil (110') ermöglicht wird; und
- Anweisen des Regelventils (134) zur Kontrolle des Fluidstroms anhand des Durchflusssollwerts und des vom Durchflusssensor (132) gemessenen aktuellen Fluidstroms (Φ ),
**dadurch gekennzeichnet, dass** der Durchflusssensor (132) stromaufwärts des Regelventils (134) angeordnet ist.

2. Durchflusssteuerungssystem (100) nach Anspruch 1, wobei das Regelventil (134) ein 3-Wege-Ventil (134) mit einem Fluidrücklaufeingang (RI) ist, der fluidisch mit dem Durchflusssensor (132) verbunden ist, wobei die Steuereinheit (120) ferner so konfiguriert ist, dass sie das 3-Wege-Ventil (134) so steuert, dass der Fluidrücklaufeingang (RI) fluidisch entweder mit dem ersten Fluidkreislauf (H) oder dem zweiten Fluidkreislauf (C) verbunden ist.

3. Durchflusssteuerungssystem (100) nach Anspruch 1 ferner umfassend ein zweites 3-Wege-Umschaltventil (110"), das einen Fluidrücklaufeingangsanschluss (RI) umfasst, der fluidisch mit dem Regelventil (134) verbunden ist; einen ersten Fluidrückausgangsanschluss (RO1), der fluidisch mit dem ersten Fluidkreislauf (H) verbunden werden kann, und einen zweiten Fluidrückausgangsanschluss (RO2), der fluidisch mit dem zweiten Fluidkreislauf (C) verbunden werden kann, wobei die Steuereinheit (120) ferner so konfiguriert ist, dass sie das zweite 3-Wege-Umschaltventil (110") zwischen zwei vollständig geöffneten Positionen schaltet, um entweder den ersten Fluidkreislauf (H) oder den zweiten Fluidkreislauf (C) fluidisch mit dem Fluidrückeingangsanschluss (RI) zu verbinden.

4. Durchflusssteuerungssystem (100) nach Anspruch 3, wobei das 3-Wege-Umschaltventil (110') mechanisch mit dem zweiten 3-Wege-Umschaltventil (110") gekoppelt ist, um ein 6-Wege-Umschaltventil (110) zu bilden, so konfiguriert, dass das Schalten des 3-Wege-Umschaltventils (110'), um einen ausgewählt aus erstem Fluidkreislauf (H) oder zweitem Fluidkreislauf (C), mit dem Fluidausgangsanschluss (O) des 3-Wege-Umschaltventils (110') fluidisch zu verbinden, das zweite 3-Wege-Umschaltventil (110") veranlasst, den ausgewählt aus erstem Fluidkreislauf (H) oder zweitem Fluidkreislauf (C) mit dem Fluidrückeingangsanschluss (RI) fluidisch zu verbinden.

5. Durchflusssteuerungssystem (100) nach einem der Ansprüche 1 bis 4, wobei die Steuereinheit (120) konfigurierbar ist, um das Schalten zwischen den beiden vollständig geöffneten Positionen des 3-Wege-Umschaltventils (110') und/oder des zweiten 3-Wege-Umschaltventils (110") umzukehren.

6. Ein Verfahren zur selektiven Kontrolle eines Fluidstroms in entweder einem ersten Fluidkreislauf (H) oder einem zweiten Fluidkreislauf (C) eines HLK-Systems für Heizung, Lüftung und Klimatisierung, umfassend:
- fluidisches Verbinden eines ersten Fluidkreislaufs (H) und eines zweiten Fluidkreislaufs (C) mit einem ersten Fluideingangsanschluss (11) bzw. einem zweiten Fluideingangsanschluss (I2) eines 3-Wege-Umschaltventils (110');
- fluidisches Verbinden eines Regelventils (134) mit einem Fluidausgangsanschluss (O) des 3-Wege-Umschaltventils (110');
- Empfangen eines Durchflusssollwertsignals durch eine Steuereinheit (120), wobei das Durchflusssollwertsignal eine Indikation für eine Auswahl eines Fluidkreislaufs und einen Durchflusssollwert umfasst
- Messen eines aktuellen Fluidstroms (Φ ) durch das Regelventil (134) mit Hilfe eines Durchflusssensors (132) ;
- Anweisen des 3-Wege-Umschaltventils (110') durch die Steuereinheit (120), zwischen zwei vollständig geöffneten Positionen umzuschalten, um entweder den ersten Fluidkreislauf (H) oder den zweiten Fluidkreislauf (C) mit dem Fluidausgangsanschluss (O) entsprechend der Auswahl des Fluidkreislaufs fluidisch zu verbinden, wodurch ein definierter maximaler Fluidstrom durch das 3-Wege-Umschaltventil (110') ermöglicht wird; und
- Ansteuerung des Regelventils (134) zur Kontrolle des Fluidstroms durch die Steuereinheit (120) unter Verwendung des Durchflusssollwerts und des vom Durchflusssensor (132) gemessenen aktuellen Fluidstroms (Φ ),
**dadurch gekennzeichnet, dass** der Durchflusssensor (132) stromaufwärts des Regelventils (134) angeordnet ist.

7. Verfahren nach Anspruch 6, bei dem das Regelventil (134) ein 3-Wege-Ventil (134) mit einem Fluidrücklaufeingang (RI) ist, wobei das Verfahren ferner umfasst:
- Fluidische Verbindung des Fluidrücklaufeingangs (RI) des 3-Wege-Ventils (134) an den Durchflusssensor (132); und
- Anweisung des 3-Wege-Ventils (134) durch die Steuereinheit (120), um den Fluidrücklaufeingang (RI) fluidisch entweder mit dem ersten Fluidkreislauf (H) oder dem zweiten Fluidkreislauf (C) zu verbinden.

8. Verfahren nach Anspruch 6 ferner umfassend:
- Fluidisches Verbinden eines Fluidrücklaufeingangsanschlusses (RI) eines zweiten 3-Wege-Umschaltventils (110") an das Regelventil (134);
- Fluidisches Verbinden des ersten Fluidkreislaufs (H) und des zweiten Fluidkreislaufs (C) mit einem ersten Fluidrückausgangsanschluss (RO1) bzw. einem zweiten Fluidrückausgangsanschluss (RO2) des zweiten 3-Wege-Umschaltventils (110"); und
- Schalten des zweiten 3-Wege-Umschaltventils (110") durch die Steuereinheit (120) zwischen zwei vollständig geöffneten Positionen, um entweder den ersten Fluidkreislauf (H) oder den zweiten Fluidkreislauf (C) mit dem Fluidrücklaufeingangsanschluss (RI) fluidisch zu verbinden.

9. Verfahren nach einem der Ansprüche 6 bis 8 ferner umfassend das Bestimmen einer ersten Energieübertragungsmenge durch den ersten Fluidkreislauf (H) und/oder einer zweiten Energieübertragungsmenge durch den zweiten Fluidkreislauf (C) unter Verwendung des von dem Durchflusssensor (132) gemessenen Fluidstroms (Φ ) und eines Temperaturdifferenzials des Fluids in Übereinstimmung mit der Auswahl des Fluidkreislaufs.

10. Eine Steuereinheit (120), die einen Prozessor umfasst, der so konfiguriert ist, dass er selektiv einen Fluidstrom entweder in einem ersten Fluidkreislauf (H) oder einem zweiten Fluidkreislauf (C) eines HLK-Systems zur Heizung, Lüftung und Klimatisierung unter Verwendung eines Durchflusssteuerungssystems (100) nach einem der Ansprüche 1 bis 5 gemäß dem Verfahren nach einem der Ansprüche 6 bis 9 steuert.

11. Computerprogrammprodukt, das Anweisungen umfasst, die, wenn sie von einer Steuereinheit (120) nach Anspruch 10 ausgeführt werden, die Steuereinheit (120) veranlassen, das Verfahren nach einem der Ansprüche 6 bis 9 auszuführen.

## Revendications

1. Système de contrôle de débit (100) pour contrôler sélectivement un débit de fluide dans un premier circuit de fluide (CVC) ou un second circuit de fluide (C) d'un système de chauffage, ventilation et climatisation (CVC), comprenant :
- une vanne d'inversion 3 voies (110') comprenant un premier port d'entrée fluide (I1) pouvant être connecté fluidiquement au premier circuit fluide (H), un deuxième port d'entrée fluide (I2) pouvant être connecté fluidiquement au deuxième circuit fluide (C), et un port de sortie fluide (O) ;
- une vanne de contrôle (134) connectée fluidiquement au port de sortie fluide (O) ;
- un capteur de débit (132) configuré pour mesurer un débit actuel de fluide (Φ ) à travers la vanne de contrôle (134) ; et
- un contrôleur (120) configuré pour :
- recevoir un signal de consigne de débit, le signal de consigne de débit comprenant une indication de la sélection d'un circuit fluide et une valeur de consigne de débit ;
- diriger la vanne d'inversion 3 voies (110') pour qu'elle passe d'une position complètement ouverte à l'autre afin de connecter fluidiquement le premier circuit defluide (H) ou le second circuit de fluide (C) au port de sortie fluide (O) en fonction de la sélection du circuit de fluide, ce qui permet un débit fluide maximal défini à travers la vanne d'inversion 3 voies (110') ; et
- diriger la vanne de contrôle (134) pour contrôler le débit de fluide, en utilisant la valeur consigne de débit et le débit actuel de fluide (Φ ) mesuré par le capteur de débit (132),
**caractérisé en ce que** le capteur de débit (132) est disposé en amont de la vanne de contrôle (134).

2. Système de contrôle de débit (100) selon la revendication 1, dans lequel la vanne de contrôle (134) est une vanne à 3 voies (134) ayant une entrée de retour de fluide (RI) connectée fluidiquement au capteur de débit (132), dans lequel le contrôleur (120) est en outre configuré pour contrôler la vanne à 3 voies (134) de manière à connecter fluidiquement l'entrée de retour de fluide (RI) avec soit le premier circuit de fluide (H), soit le deuxième circuit de fluide (C).

3. Système de contrôle de débit (100) selon la revendication 1 , comprenant en outre une deuxième vanne d'inversion 3 voies (110") comprenant un port d'entrée de retour fluide (RI) connecté fluidiquement à la vanne de contrôle (134) ; un premier port de sortie de retour de fluide (RO1 ) pouvant être connecté fluidiquement au premier circuit de fluide (H) et un deuxième port de sortie de retour de fluide (RO2) pouvant être connecté fluidiquement au deuxième circuit de fluide (C), le contrôleur (120) étant en outre configuré pour commuter la deuxième vanne inversion 3 voies (110") entre deux positions complètement ouvertes pour connecter fluidiquement soit le premier circuit de fluide (H), soit le deuxième circuit de fluide (RI) avec le port d'entrée de retour de fluide (RI).

4. Système de contrôle de débit (100) selon la revendication 3, dans lequel la vanne d'inversion 3 voies (110') est couplée mécaniquement avec la seconde vanne d'inversion 3 voies (110") pour former une vanne d'inversion 6 voies (110), configurée de telle sorte que la commutation de la vanne d'inversion 3 voies (110') pour connecter fluidiquement une sélection du premier circuit fluide (H) ou du second circuit fluide (C) avec le port de sortie fluide (O) de la vanne d'inversion 3 voies (110') entraîne la connexion fluidique de la seconde vanne d'inversion 3 voies (110") à la sélection du premier circuit fluide (H) ou du second circuit fluide (C) avec le port d'entrée retour fluide (RI).

5. Système de contrôle de débit (100) selon l'une des revendications 1 à 4, dans lequel le contrôleur (120) est configurable pour inverser la commutation entre les deux positions d'ouverture totale de la vanne d'inversion 3 voies (110') et/ou de la seconde vanne d'inversion 3 voies (110").

6. Un procédé pour contrôler sélectivement un débit de fluide dans un premier circuit de fluide (H) ou un second circuit de fluide (C) d'un système de chauffage, ventilation et climatisation CVC, comprenant :
- connecter fluidiquement un premier circuit fluide (H) et un second circuit fluide (C) à un premier port d'entrée fluide (I1 ), respectivement un second port d'entrée fluide (I2) d'une vanne d'inversion 3 voies (110') ;
- connecter fluidiquement une vanne de contrôle (134) à un port de sortie fluide (O) de la vanne d'inversion 3 voies (110') ;
- recevoir, par un contrôleur (120), un signal de consigne de débit, le signal de consigne de débit comprenant une indication de la sélection d'un circuit fluide et une valeur de consigne de débit ;
- mesurer un débit actuel de fluide (Φ ) à travers la vanne de contrôle (134) à l'aide d'un capteur de débit (132) ;
- diriger, par le contrôleur (120), la vanne d'inversion 3 voies (110') pour qu'elle commute entre deux positions complètement ouvertes pour connecter fluidiquement soit le premier circuit de fluide (H), soit le second circuit de fluide (C) avec l'orifice de sortie de fluide (O) selon la sélection du circuit de fluide, permettant un débit de fluide maximum défini à travers la vanne d'inversion 3 voies (110') ; et
- diriger, par le contrôleur (120), la vanne de contrôle (134) pour contrôler le débit de fluide, en utilisant la valeur de consigne de débit et le débit actuel de fluide (Φ ) mesuré par le capteur de débit (132),
**caractérisé par le fait que** le capteur de débit (132) est disposé en amont de la vanne de contrôle (134).

7. Procédé selon la revendication 6, dans lequel la vanne de contrôle (134) est une vanne 3 voies (134) comprenant une entrée retour fluide (RI), le procédé comprenant en outre :
- connecter fluidiquement l'entrée de retourfluide (RI) de la vanne 3 voies (134) au capteur de débit (132) ; et
- diriger, par le contrôleur (120), la vanne 3 voies (134) de manière à connecter fluidiquement l'entrée retour fluide (RI) soit au premier circuit fluide (H), soit au second circuit fluide (C).

8. Procédé selon la revendication 6, comprenant en outre :
- connecter fluidiquement un port d'entrée retour de fluide (RI) d'une seconde vanne d'inversion 3 voies (110") à la vanne de contrôle (1 34) ;
- connecter fluidiquement le premier circuit fluide (H) et le second circuit fluide (C) à un premier port de sortie de retour fluide (RO1 ), respectivement à un second port de sortie de retour fluide (RO2) de la seconde vanne d'inversion 3 voies (110") ; et
- diriger, par le contrôleur (120), la deuxième vanne d'inversion 3 voies (110") pour qu'elle commute entre deux positions complètement ouvertes pour connecter fluidiquement soit le premier circuit fluide (H), soit le deuxième circuit fluide (C) avec le port d'entrée retour fluide (RI).

9. Procédé selon l'une des revendications 6 à 8, comprenant en outre la détermination d'une première quantité de transfert d'énergie à travers le premier circuit de fluide (H) et/ou d'une deuxième quantité de transfert d'énergie à travers le deuxième circuit de fluide (C) à l'aide du débit de fluide (Φ ) mesuré par le capteur de débit (132) et d'un différentiel de température du fluide en fonction de la sélection du circuit de fluide.

10. Contrôleur (120) comprenant un processeur configuré pour contrôler sélectivement un débit de fluide dans un premier circuit de fluide (H) ou un second circuit de fluide (C) d'un système de chauffage, ventilation et climatisation CVC à l'aide d'un système de contrôle de débit (100) de l'une des revendications 1 à 5 selon le procédé de l'une des revendications 6 à 9.

11. Produit d'un programme d'ordinateur comprenant des instructions qui, lorsqu'elles sont exécutées par un contrôleur (120) selon la revendication 10, amènent le contrôleur (120) à mettre en oeuvre le procédé selon l'une des revendications 6 à 9.
